# EUROPÄISCHE PATENTSCHRIFT

(11) **EP 3 081 346 B1**
(45) Veröffentlichungstag und Bekanntmachung des Hinweises auf die Patenterteilung: **05.12.2018**
(21) Anmeldenummer: 16163806.9
(22) Anmeldetag: 05.04.2016
(51) Int. Cl.: B25J 13/02, B25J 19/06, B25J 13/06, B25J 9/16

(54) **ROBOTER-BEDIENHANDGERÄT MIT EINER ADAPTERVORRICHTUNG FÜR EIN MOBILES ENDGERÄT**
ROBOT MANUAL CONTROL DEVICE HAVING AN ADAPTER DEVICE FOR A MOBILE TERMINAL
APPAREIL DE COMMANDE MANUEL ROBOTISE COMPRENANT UN DISPOSITIF D'ADAPTATION POUR UN TERMINAL MOBILE

(30) Priorität: 13.04.2015 DE 102015206571
(43) Veröffentlichungstag der Anmeldung: 19.10.2016
(73) Patentinhaber: KUKA Deutschland GmbH, 86165 Augsburg (DE)
(72) Erfinder: KOGAN, Yevgen, 86152 Augsburg (DE); RIEDEL, Martin, 86165 Augsburg (DE)
(74) Vertreter: Ege Lee & Partner Patentanwälte PartGmbB

(56) Entgegenhaltungen:
- JP-A- 2016 060 018
- US-A1- 2009 129 003
- US-A1- 2015 051 736
- US-A1- 2016 114 478
- US-B1- 6 697 681

## Beschreibung

Die Erfindung betrifft ein Roboter-Bedienhandgerät, aufweisend eine Sicherheits-Grundsteuervorrichtung, ein mobiles Endgerät und einen Halter, der ausgebildet ist, das mobile Endgerät an der Sicherheits-Grundsteuervorrichtung zu befestigen.

Die WO 03/088011 A2 beschreibt eine mobile, einhändig haltbare, elektronische Recheneinheit, insbesondere in Art eines sogenannten Personal-Data-Assistant (PDA) oder Handheld-Computer, mit einer softwaregesteuerten Prozessoreinheit, wenigstens einer mit dieser verbundenen Speichervorrichtung zur Hinterlegung von abzuarbeitenden Softwaremodulen und/oder Daten, wenigstens einer Anzeigevorrichtung zur visuell erfassbaren Ausgabe von Informationen und mit wenigstens einer Eingabevorrichtung zumindest zur Beeinflussung der Betriebsfunktionen der Recheneinheit und/oder zur Eingabe von Daten, wobei die Anzeige- und Eingabevorrichtung in Art eines berührungssensitiven Bildschirms, beispielsweise in Form eines Touch-Screens, baulich überlagert bzw. funktionell kombiniert sind und mit wenigstens einer am Gehäuse der Recheneinheit standardmäßig ausgebildeten Schnittstelle, welche zur Verbindung mit peripheren, elektronischen oder elektrischen Geräten, wie z. B. einem Personal-Computer, vorgesehen ist, wobei die standardmäßig ausgebildete Schnittstelle oder eine eigenständig ausgebildete Schnittstelle zur Verbindung mit wenigstens einem Sicherheitsschaltelement in Art eines Not-Aus-Schalters und/oder eines Zustimmtasters vorgesehen ist.

Die US 2015/051736 A1 beschreibt ein Roboter-Bedienhandgerät, das einen Halter für einen Tablet-Computer aufweist. Der dortige Halter weist eine erste Klammer und eine zweite Klammer auf, die über ein Gestänge längenverstellbar verbunden sind, um den Tablet-Computer an diagonal gegenüberliegenden Ecken des Tablet-Computers formschlüssig umgreifen zu können. Jede der beiden Klammern umgreift dabei jeweils zwei Randabschnitte des Tablet-Computers, so dass der Tablet-Computer durch die beiden Klammern an all seinen vier Randabschnitten belegt ist.

Die US 2009/129003 A1 beschreibt eine mobile Bedieneinheit zum Fernsteuern eines Roboters. Die mobile Bedieneinheit weist ein kofferartiges Gehäuse auf, in dem ein Monitor mit einer konfigurierbaren Benutzeroberfläche, sowie mehrere Aufnahmeplätze für Steuermodule angeordnet sind. Jedes Steuermodul ist jeweils einzeln lösbar in einer der mehreren Aufnahmeplätze aufgenommen und umfasst einen oder mehrere Schalter.

Die US 6,697,681 B1 beschreibt eine mit einem Netzwerk verbindbare Vorrichtung mit mehreren Einheiten programmierbarer Ausstattung, aufweisend ein Bedienungselement, das an das Steuergerät einer Einheit programmierbarer Ausstattung angeschlossen ist, eine in bestimmter, ausgewählter Weise an das Bedienungselement angeschlossene Betriebseinheit, die damit über das Bedienungselement mit dem Steuergerät verbunden ist, um die Einheit programmierbarer Ausstattung mittels des Steuergeräts zu bedienen, wobei das Bedienungselement der Betriebseinheit die eindeutige Zuordnung des Bedienungselements zu dem jeweiligen angeschlossenen Steuergerät der Einheit programmierbarer Ausstattung anzeigt.

Aufgabe der Erfindung ist es, ein Roboter-Bedienhandgerät, insbesondere ein einheitliches Roboter-Bedienhandgerät zu schaffen, das mit unterschiedlichen, insbesondere handelsüblichen mobilen Endgeräten konfiguriert und/oder ausgestattet werden kann.

Die Aufgabe der Erfindung wird gelöst durch ein Roboter-Bedienhandgerät, aufweisend eine Sicherheits-Grundsteuervorrichtung, ein mobiles Endgerät und einen Halter, der ausgebildet ist, das mobile Endgerät an der Sicherheits-Grundsteuervorrichtung zu befestigen, bei dem der Halter wenigstens eine Adaptervorrichtung aufweist, die ausgebildet ist, das mobile Endgerät mit der Sicherheits-Grundsteuervorrichtung mechanisch zu verbinden, wobei die Sicherheits-Grundsteuervorrichtung ein erstes Bedienhandgeräteteil aufweist und wenigstens ein bezüglich des ersten Bedienhandgeräteteils verstellbares zweites Bedienhandgeräteteil aufweist, wobei die Bedienhandgeräteteile derart verstellbar miteinander gekoppelt sind, dass die Bedienhandgeräteteile in einer Grundanordnung ein konturreduziertes Roboter-Bedienhandgerät bilden und in einer konturerweiterten Aufnahmeanordnung, in der das zweite Bedienhandgeräteteil von dem ersten Bedienhandgeräteteil aus der Grundanordnung verstellt angeordnet ist, das Roboter-Bedienhandgerät zur Aufnahme des mobilen Endgeräts durch die Adaptervorrichtung ausgestaltet ist.

Die Aufgabe der Erfindung wird insbesondere gelöst durch ein Roboter-Bedienhandgerät, aufweisend eine Sicherheits-Grundsteuervorrichtung, ein mobiles Endgerät und einen Halter, der ausgebildet ist, das mobile Endgerät an der Sicherheits-Grundsteuervorrichtung zu befestigen, bei dem der Halter wenigstens eine Adaptervorrichtung aufweist, die ausgebildet ist, wahlweise eines von mehreren möglichen, unterschiedlichen mobilen Endgeräten, insbesondere mobile Endgeräte unterschiedlicher Modelltypen und/oder Größen mit derselben Sicherheits-Grundsteuervorrichtung verbinden zu können und das ausgewählte mobile Endgerät in einem eingesetzten oder angesetzten Zustand mit der Sicherheits-Grundsteuervorrichtung mechanisch zu verbinden.

Das Roboter-Bedienhandgerät kann insbesondere ein Roboterprogrammierhandgerät sein. Das Roboter-Bedienhandgerät kann auch ein Manipulator-Bedienhandgerät sein bzw. als ein solches bezeichnet werden. Die Adaptervorrichtung kann veränderbar, insbesondere verstellbar ausgebildet sein, um wahlweise eines von mehreren möglichen, unterschiedlichen mobilen Endgeräten, insbesondere mobile Endgeräte unterschiedlicher Modelltypen und/oder Größen aufnehmen zu können, wobei nur diese eine veränderbare, insbesondere verstellbare Adaptervorrichtung mit der Sicherheits-Grundsteuervorrichtung mechanisch verbunden wird.

Alternativ können mehrere verschiedene Adaptervorrichtungen vorgesehen sein, wobei insbesondere für jedes auswählbares mobile Endgerät eine separate, an das jeweilige Modell und/oder dessen Größe angepasste Adaptervorrichtung vorgesehen sein kann, und wobei jede dieser mehreren verschiedenen Adaptervorrichtungen hinsichtlich einer mechanischen Verbindung der Adaptervorrichtung mit derselben Sicherheits-Grundsteuervorrichtung gleich ausgebildet sind.

Indem der Halter wenigstens eine Adaptervorrichtung aufweist, die ausgebildet ist, das mobile Endgerät mit der Sicherheits-Grundsteuervorrichtung mechanisch zu verbinden, können insbesondere handelsübliche mobile Endgerät, wie beispielsweise Tabletcomputer oder Smartphones als sichere Eingabegeräte zur Roboterbedienung genutzt werden. Dies ist besonders deshalb interessant, da viele neue fortschrittliche Bedienkonzepte sehr schnell bei handelsüblichen mobilen Endgeräten technisch umgesetzt werden. Mit einem erfindungsgemäßen Roboter-Bedienhandgerät kann eine bestehende Sicherheits-Grundsteuervorrichtung sehr einfach und schnell mit einem fortschrittlichen Eingabegerät ausgestattet werden bzw. auf fortschrittliche Eingabegeräte umgerüstet werden.

Ziel der Erfindung ist es, ein industrietaugliches Roboter-Bedienhandgerät zu schaffen, das in Hinblick auf Steuerungsstandard und Sicherheitsvorschriften sowie Umwelteinflüssen und/oder Ergonomie bei der Bedienung auf einem fortschrittlichen Niveau gehalten werden kann. Indem die Adaptervorrichtung es ermöglicht, aktuelle, handelsübliche mobile Endgeräte mit einer bestehenden Sicherheits-Grundsteuervorrichtung zu verbinden, können die sehr leistungsfähigen aktuell auf dem Markt erhältlichen mobilen Endgeräte zur Steuerung des industrietauglichen Roboter-Bedienhandgeräts genutzt werden.

Mittels der Adaptervorrichtung können unterschiedlich gestaltete mobile Endgeräte mechanisch mit der insbesondere einheitlichen Sicherheits-Grundsteuervorrichtung verbunden werden. Mittels der Adaptervorrichtung kann das mobile Endgerät sogar manuell durch einen Benutzer von der Sicherheits-Grundsteuervorrichtung wahlweise getrennt oder verbunden werden. So können insoweit zwei Geräte, d.h. die einheitliche Sicherheits-Grundsteuervorrichtung und das ausgewählte mobile Endgerät miteinander kombiniert werden, oder jedes Einzelgerät separat verwendet werden. Die Sicherheits-Grundsteuervorrichtung ist dabei insoweit autark in einem sicheren Betrieb betriebsfähig und das entnommene mobile Endgerät auch selbstständig betriebsfähig, wenn auch nicht in sicherer Technik. Folglich können insoweit drei unterschiedliche vollwertige Bediengeräte für unterschiedliche Szenarien erzeugt werden.

Abweichend zu bekannten Lösungen wird dem Benutzer mit der vorliegenden Erfindung die Möglichkeit gegeben, den Roboter jederzeit, mit einem beim Roboter verbleibenden Basisbediengerät, d.h. allein mit der Sicherheits-Grundsteuervorrichtung in den gängigen und/oder minimalen Grundfunktionen manuell zu steuern oder anzuhalten. Dieses einfache Basisbediengerät, d.h. die Sicherheits-Grundsteuervorrichtung kann durch mechanische und steuerungstechnische Kopplung mit einem mobilen Endgerät, wie beispielsweise einem Tabletcomputer oder Smartphone zu einem sehr hochwertigen und multifunktionalen Bedienhandgerät erweitert werden, welches selbst für komplexe und aufwendige Programmier-, Analyse- und Servicearbeiten bestens geeignet ist. Im separaten Betrieb des mobile Endgeräts, wie der Tabletcomputer, also losgelöst vom Basisbediengerät, d.h. losgelöst von der Sicherheits-Grundsteuervorrichtung, ist dieses mobile Endgerät portabel und kann ortsungebunden, z.B. am Arbeitsplatz, im Büro oder in einem Besprechungsraum einzeln oder beispielsweise mit Anbindung an externe Bildschirme oder externe Eingabegeräte dazu genutzt werden, Arbeitsschritte oder Programme für den Roboter offline vorzubereiten, gesammelte Daten auszuwerten und/oder Statusmeldungen bzw. Zustände eines oder mehrerer Roboter per Fernwartung abzufragen. Des Weiteren kann in diesem Fall das mobile Endgerät als ein nutzergebundenes, persönliches Eingabegerät des Roboter-Bedienhandgeräts verwendet werden. Dies hat Vorteile, das beispielsweise mehrere Personen in unterschiedlichen Rollen an demselben Roboter arbeiten können, wobei die für die jeweilige Person optimale Konfiguration, z.B. bezüglich der Softwareausstattung, der Benutzerdaten, wie Cookies, Accounts, und/oder Zugriffsrechte, auf dem mobilen Endgerät individuell zusammengestellt sein kann bzw. später wieder vorgefunden werden kann.

In all den jeweiligen Ausführungen der Adaptervorrichtung können also einer Sicherheits-Grundsteuervorrichtung mehrere, insbesondere baugleiche mobile Endgeräte zugeordnet sein. Dabei kann beispielsweise eine einzelne Adaptervorrichtung an der Sicherheits-Grundsteuervorrichtung verbleiben und die mehrere baugleichen mobilen Endgeräte, beispielsweise die individuellen Endgeräte verschiedener Personen wahlweise in die Adaptervorrichtung eingefügt werden. Alternativ kann jedes individuelle, insbesondere baugleiche Endgerät mit einer eigenen Adaptervorrichtung versehen sein, wobei die mehrere baugleichen mobilen Endgeräte, beispielsweise die individuellen Endgeräte verschiedener Personen zusammen mit der individuellen Adaptervorrichtung wahlweise mit der Sicherheits-Grundsteuervorrichtung mechanisch verbunden werden können.

Bei einem weiteren Aspekt der Erfindung können einer einheitlichen Sicherheits-Grundsteuervorrichtung mehrere verschiedene Adaptervorrichtungen zugeordnet sein, wobei die Adaptervorrichtungen zur mechanischen Verbindung mit der Sicherheits-Grundsteuervorrichtung identische Kopplungsmittel bzw. Haltemittel aufweist und jeweils eine einzelne der verschiedenen Adaptervorrichtungen individuelle Kopplungsmittel bzw. Haltemittel zur Befestigung eines bestimmten von mehreren unterschiedlichen mobilen Endgeräten aufweist. So kann dieselbe Sicherheits-Grundsteuervorrichtung wahlweise mit unterschiedlichen Arten von mobilen Endgeräten betrieben werden.

Die Adaptervorrichtung kann wenigstens ein verstellbares Halteglied aufweisen, das ausgebildet ist, in einer Schließstellung des verstellbaren Halteglieds das mobile Endgerät formschlüssig und/oder kraftschlüssig, insbesondere zumindest an zwei diagonal gegenüberliegenden Ecken des mobilen Endgeräts mit der Sicherheits-Grundsteuervorrichtung zu verbinden und in einer Offenstellung des verstellbaren Halteglieds das mobile Endgerät zu seiner Trennung von der Sicherheits-Grundsteuervorrichtung mechanisch freizugeben.

Das Halteglied kann insbesondere zur manuellen Betätigung ausgebildet sein. So kann ein Benutzer, beispielsweise ein Roboterprogrammierer das mobile Endgerät manuell, ohne Werkzeuge zu benötigen, von der Sicherheits-Grundsteuervorrichtung lösen bzw. mit dieser verbinden.

Die Sicherheits-Grundsteuervorrichtung weist ein erstes Bedienhandgeräteteil auf und wenigstens ein bezüglich des ersten Bedienhandgeräteteils verstellbares zweites Bedienhandgeräteteil auf, wobei die Bedienhandgeräteteile derart verstellbar miteinander gekoppelt sind, dass die Bedienhandgeräteteile in einer Grundanordnung ein konturreduziertes Roboter-Bedienhandgerät bilden und in einer konturerweiterten Aufnahmeanordnung, in der das zweite Bedienhandgeräteteil von dem ersten Bedienhandgeräteteil aus der Grundanordnung verstellt angeordnet ist, das Roboter-Bedienhandgerät zur Aufnahme des mobilen Endgeräts durch die Adaptervorrichtung ausgestaltet ist.

Das erste Bedienhandgeräteteil und das zweite Bedienhandgeräteteil können eine jeweilige Gestalt aufweisen, welche Gestalten sich in der konturreduzierten Anordnung der Bedienhandgeräteteile in ihren Formen ergänzen. Die beiden Bedienhandgeräteteile können sich sozusagen puzzleteilartig aneinanderfügen und in der konturreduzierten Anordnung eine neue Grundform bilden. Das erste Bedienhandgeräteteil und das zweite Bedienhandgeräteteil können insbesondere eine solche Größe und/oder Form aufweisen, so dass die Bedienhandgeräteteile in der konturreduzierten Anordnung mit einer Hand eines Benutzers ergriffen, insbesondere umgriffen werden können.

Die Sicherheits-Grundsteuervorrichtung kann, insbesondere das erste Bedienhandgeräteteil und/oder das zweite Bedienhandgeräteteil können wenigstens ein Nothalt-Auslösemittel, wenigstens eine Zustimmungseinrichtung, wenigstens ein Betriebsartauswahlmittel und/oder ein Anzeigemittel, insbesondere ein elektronisches Display aufweisen.

Zumindest das wenigstens eine Nothalt-Auslösemittel, das wenigstens eine Zustimmungseinrichtung und/oder das wenigstens eine Betriebsartauswahlmittel können in sicherer Technik mit einer Robotersteuerung steuerungstechnisch verbunden sein, insbesondere kommunizieren.

Die Sicherheits-Grundsteuervorrichtung kann ausgebildet und/oder eingerichtet sein, in der Grundanordnung durch das wenigstens eine Nothalt-Auslösemittel, die wenigstens eine Zustimmungseinrichtung, und/oder das wenigstens eine Betriebsartauswahlmittel angesteuert zu werden.

Die Sicherheits-Grundsteuervorrichtung ist in einer solchen Ausführung also nicht nur dann zum Ansteuern des Roboters ausgebildet und/oder eingerichtet, wenn das mobile Endgerät mit der Sicherheits-Grundsteuervorrichtung mechanisch und steuerungstechnisch verbunden ist, sondern auch dann zum Ansteuern des Roboters ausgebildet und/oder eingerichtet, wenn das mobile Endgerät von der Sicherheits-Grundsteuervorrichtung entfernt ist, insbesondere entnommen ist. In einem solchen Falle kann ein gewisser Umfang an Grundsteuerfunktionen über Eingabemittel angesteuert werden, welche Teil der Sicherheits-Grundsteuervorrichtung sind. Dies können insbesondere das bereits erwähnte Nothalt-Auslösemittel, die Zustimmungseinrichtung und/oder das Betriebsartauswahlmittel sein. Daneben können weitere ggf. nicht-sichere Eingabemittel und/oder Anzeigemittel an der Sicherheits-Grundsteuervorrichtung vorgesehen sein. Dies können beispielsweise ein oder mehrere Displays, Schalter, Tasten, insbesondere zur Menüsteuerung und zur Auslösung eines Touch-ups und/oder Start-/Stopp-Tasten sein.

Das erste Bedienhandgeräteteil und/oder das zweite Bedienhandgeräteteil kann die Adaptervorrichtung bilden, insbesondere kann das erste Bedienhandgeräteteil und/oder das zweite Bedienhandgeräteteil das verstellbare Halteglied aufweisen. So kann beispielsweise das wenigstens eine erste Bedienhandgeräteteil ein erstes Halteglied aufweisen und das wenigstens eine zweite Bedienhandgeräteteil ein zweites Halteglied aufweisen, wobei die wenigstens beiden Bedienhandgeräteteile bzw. die wenigstens beiden Halteglieder gegeneinander verstellbar ausgebildet sind. Dabei kann eine die beiden Bedienhandgeräteteile bzw. die beiden Halteglieder verbindende Verstelleinrichtung vorgesehen sein. Jedes Halteglied kann an ein spezielles mobiles Endgerät angepasst ausgebildet sein.

Die Adaptervorrichtung kann wenigstens ein elastisch verformbares Element aufweisen, das ausgebildet ist, das mobile Endgerät unter elastischer Vorspannung mit der Sicherheits-Grundsteuervorrichtung zu verbinden.

In einer derartigen, elastischen Variante kann beispielsweise ein Rahmen aus einem elastischen Werkstoff vorgesehen sein. Ein solcher anschmiegsamer Rahmen kann ein an den Rand des mobilen Endgeräts angepasstes Profil aufweisen, das beispielsweise auf eine dem Perimeter des Bediengeräts entsprechende Länge zugeschnitten wird und beispielsweise mit einem Bügelschloss verriegelt um das Bediengerät gespannt wird. Die Innenseite des Profils kann dabei eine nachgiebige weiche Nut aufweisen, durch welche beliebige mobile Endgeräte aufgenommen werden können. Die Außenseite des elastischen Rahmens kann zur Montage von separaten Bedienelementen ausgebildet sein. Hierzu kann eine bestimmte Profilform verwendet werden, die einen harten, aber biegsamen Kern besitzt. Die Stabilität des das mobile Endgerät umschlingenden weichen Rahmens kann neben einer formbaren Verstärkungsplatte vor allem über zwei Seile gewährleistet sein, die über ein Schloss verbunden werden. Die am mobilen Endgerät, insbesondere an einem Tabletcomputer befindlichen Bedienelemente und Anschlüsse können dadurch zugänglich gemacht werden, indem an den entsprechenden Stellen im Rahmen Öffnungen ausgebildet sind. Des Weiteren kann das Profil einen Kabelkanal beinhalten. Ein oder mehrere ggf. notwendige Lüftungsöffnungen können über die gesamte Länge verteilt auch an dem Profil vorgesehen sein. Je nach Dicke und Elastizität des Profils kann inhärent auch ein Fallschutz gebildet werden.

Der Vorteil einer solchen Lösung ist mitunter, dass der gesamte Rahmen sehr einfach aus einem Werkstück aufgebaut werden kann.

Die Adaptervorrichtung kann wenigstens ein austauschbares Halteglied, insbesondere ein rahmenförmiges austauschbares Halteglied aufweisen, das wenigstens einen Randabschnitt des mobilen Endgeräts formschlüssig und/oder kraftschlüssig einfasst und das wenigstens ein Befestigungsmittel aufweist, welches das austauschbare Halteglied lösbar mit der Sicherheits-Grundsteuervorrichtung verbindet. Das Halteglied kann insbesondere starr ausgebildet sein.

Im Falle eines rahmenförmigen Halteglieds kann das rahmenförmige Halteglied einen inneren Ausschnitt aufweisen, welcher an die Kontur eines jeweiligen mobilen Endgeräts angepasst ist. Der äußere Umfang des rahmenförmigen Halteglieds kann dabei an die Sicherheits-Grundsteuervorrichtung angepasst sein, insbesondere in eine entsprechend ausgebildete Aufnahme der Sicherheits-Grundsteuervorrichtung passend einsetzbar sein.

Die Adaptervorrichtung kann in einer alternativen Ausführungsform einen mehrteiligen Rahmen aufweisen, der aus Einzelstreben, insbesondere geraden Einzelstreben und die Einzelstreben verbindende Eckverbindern aufgebaut ist. Im Falle einer rechteckigen oder quadratischen Adaptervorrichtung können zwei in einem horizontalen Abstand voneinander angeordnete Einzelstreben und zwei in einem vertikalen Abstand voneinander angeordnete Einzelstreben vorgesehen sein, wobei die jeweils an einer Ecke sich treffenden Enden zweier benachbarter Einzelstreben mittels jeweils eines Eckverbinders mechanisch verbunden sind. Indem die Adaptervorrichtung wahlweise aus Einzelstreben verschiedener Längen aufgebaut werden kann, können Adaptervorrichtungen unterschiedlicher Größe erzeugt werden, so dass mobile Endgeräte unterschiedlichster Typen und/oder Größen in der Adaptervorrichtung gehalten werden können.

Wenigstens eine der Einzelstreben kann als eine Schiene ausgebildet sein, an der ein Abstandshalter, welcher einen Randabschnitt des mobile Endgeräts formschlüssig und/oder kraftschlüssig umfasst, entlang der Längserstreckung der Schiene verstellbar gelagert ist oder wenigstens eine der Einzelstreben kann mehrere entlang der Längserstreckung der Einzelstrebe in Abständen, insbesondere in gleichen Abständen voneinander angeordnete Befestigungsstellen aufweisen, wobei ein Abstandshalter, welcher einen Randabschnitt des mobilen Endgeräts formschlüssig und/oder kraftschlüssig umfasst, an wenigstens einer dieser Befestigungsstellen befestigt ist. Der Abstandshalter bildet insoweit eine beispielhafte Ausführungsvariante eines austauschbaren Halteglieds. Des Weiteren entsteht durch die Verwendung des Abstandshalters Platz zwischen dem Bediengerät und dem Rahmen, womit die evtl. am Rand des Bediengeräts befindlichen Bedienelemente, wie beispielsweise Taster und Schnittstellen, trotz des Rahmens erreichbar bleiben.

Alternativ oder ergänzend zu einer Auswahl von verschiedenen Längen von Einzelstreben, kann zur Anpassung der Adaptervorrichtung an das jeweilige mobile Endgerät der aus den Einzelstreben bzw. Schienen und den Eckverbindern gebildete Rahmen wahlweise mit unterschiedlichen Abstandshaltern, insbesondere unterschiedlich großen Abstandshaltern versehen werden, um ein entsprechend größeres oder kleineres mobiles Endgerät aufnehmen zu können. Es können ggf. für verschiedene mobile Endgeräte auch dieselben Abstandshaltern verwendet werden und diese dabei jedoch in Abhängigkeit des konkreten mobilen Endgeräts an unterschiedlichen Befestigungsstellen der Schienen der Adaptervorrichtung befestigt werden. So kann beispielsweise eine Größe einer Adaptervorrichtung für verschiedene Gerätetypen bzw. Modelle unterschiedlicher Hersteller von zumindest annähernd gleich großen mobilen Endgeräten verwendet werden und dabei die Abstandshalter auf den Schienen mittels der unterschiedlichen Befestigungsstellen versetzt angeordnet werden, um die Adaptervorrichtung beispielsweise auf im Randbereich der mobilen Endgeräte vorhandene, unterschiedlich positionierte Taster und/oder Schalter flexibel anpassen zu können.

Die Sicherheits-Grundsteuervorrichtung kann an wenigstens einer der Einzelstreben, der Eckverbinder und/oder der Schienen befestigt sein, insbesondere manuell abnehmbar befestigt sein.

Die Sicherheits-Grundsteuervorrichtung kann vollständig in einem einzelnen Gehäuse enthalten sein und dieses einzelne Gehäuse kann an einer der Einzelstreben, der Eckverbinder und/oder der Schienen befestigt sein, insbesondere manuell abnehmbar befestigt sein. Alternativ können sich mehrere Komponenten der Sicherheits-Grundsteuervorrichtung auf mehrere Gehäuse verteilen und diese mehreren Gehäuse jeweils einzeln an einer der Einzelstreben, der Eckverbinder und/oder der Schienen befestigt sein, insbesondere manuell abnehmbar befestigt sein. Beispielsweise kann das Nothalt-Auslösemittel in einem separaten Gehäuse untergebracht sein, die Zustimmungseinrichtung in einem separaten Gehäuse untergebracht sein, und/oder das Betriebsartauswahlmittel in einem separaten Gehäuse untergebracht sein.

Die Sicherheits-Grundsteuervorrichtung kann also mehrere in separaten Gehäusen untergebrachte Steuerbauteile aufweisen, insbesondere das wenigstens eine Nothalt-Auslösemittel, die wenigstens eine Zustimmungseinrichtung, und/oder das wenigstens eine Betriebsartauswahlmittel kann in jeweils einem separaten Gehäuse untergebracht sein und wenigstens eines der mehreren Gehäuse kann dabei an wenigstens einer der Einzelstreben, der Eckverbinder und/oder der Schienen befestigt sein, insbesondere manuell abnehmbar befestigt sein.

In allen Ausführungsformen kann das mobile Endgerät einen programmgesteuerten elektronischen Rechner, ein Touch-Display und ein auf dem elektronischen Rechner gespeichertes Programm aufweisen, das zur Erstellung von Roboterprogrammen und/oder zum Ansteuern eines Roboters, insbesondere zum Bewegen eines Roboterarms ausgebildet ist und das über das Touch-Display zu bedienen ist.

Das erfindungsgemäße Roboter-Bedienhandgerät kann je nach Ausführungsform eine oder mehrere der folgenden Vorteile bieten.

Das Roboter-Bedienhandgerät kann eine portable und/oder kompakte Einheit bilden, die einfach zu koppeln und zu transportieren ist. Größere und unhandliche Bauteile wie Sicherheitsschalter, Griffe und Schutzeinrichungen bleiben als die beschriebene Sicherheits-Grundsteuervorrichtung vor Ort, d.h. in Nähe des Roboters und werden im Allgemeinen nicht woanders hin mitgenommen. Durch das Roboter-Bedienhandgerät können die Leistungsfähigkeit, die Displayqualität und/oder die Bedienungsfreundlichkeit neuester mobiler Endgeräte, wie Tabletcomputer zur Steuerung eines Roboters genutzt werden.

Integrations- und Kopplungsmöglichkeiten für mehrere Tabletmodelle und -baureihen von unterschiedlichen Herstellern können dabei vorgesehen sein. Auch neu erhältliche Modelle können mit wenig Aufwand schnell eingebunden und genutzt werden. Benutzerwünsche und Benutzeranforderungen an Hard- und Software können durch individuelle Wahl des mobilen Endgeräts berücksichtigt werden. Der Nutzer des Roboters profitiert von der ständigen Weiterentwicklung der mobilen Endgeräte, insbesondere bei Tabletcomputern und deren Leistung. Ein neues Gerät kann einfach eingebunden werden, dies ist mit geringem Aufwand und geringen Kosten möglich. Unterschiedliche Benutzer können ihre unterschiedlichen mobilen Endgeräte, insbesondere Tabletcomputer mechanisch und steuerungstechnisch auf einfache Weise wahlweise mit demselben Roboter verbinden. Der Benutzer kann aus einem großen Spektrum an mobilen Endgeräten, wie Tabletcomputer heraussuchen, welche Leistungs- und Preiskategorie für ihn am zielführendsten ist. Es kann auch eine Mischung möglich sein. So können einfache mobile Endgeräte bzw. Tabletcomputer für Wartungs- und Servicemitarbeiter vorgesehen sein und sehr leistungsfähige mobile Endgeräte bzw. Tabletcomputer beispielsweise für Applikationsentwickler oder Tester vorgesehen sein.

Die Sicherheits-Grundsteuervorrichtung kann insoweit ein Basisbediengerät am Roboter bilden. Es kann eine Grundfunktionalität am Roboter bieten, vor allem hinsichtlich einer Sicherheitsfunktionalität. Die Sicherheits-Grundsteuervorrichtung alleine kann kostengünstig und standardisiert aufgebaut sein. Sie verbleibt am Roboter bzw. in der Nähe des Roboters. Es kann eine Sicherheits-Grundsteuervorrichtung pro Roboter vorgesehen sein. Sie kann eingerichtet sein, lediglich einfache mechanische und elektrische Kopplungsmöglichkeiten aufzuweisen, wobei die Sicherheits-Grundsteuervorrichtung nicht verändert oder erneuert werden müsste, da nur das mobile Endgerät ausgetauscht oder ersetzt werden muss, wenn fortschrittliche Neuerungen vorgesehen werden sollen. Die Sicherheits-Grundsteuervorrichtung kann optisch ansprechend und wie eine vollwertige Einheit, also auch ohne mobile Endgerät zumindest in Grundfunktionen funktionsfähig ausgebildet sein. Die Sicherheits-Grundsteuervorrichtung kann Ergonomie- und/oder Schutzfunktionalitäten für das mobile Endgerät, insbesondere den Tabletcomputer aufweisen. Es kann ggf. in seiner Form und/oder Größe verändert werden, um mit verschiedenen mobilen Endgeräten, insbesondere Tabletcomputern gekoppelt zu werden.

Die Erfindung wird im Folgenden mitunter anders ausgedrückt, weiter erläutert, wobei auch andere Begriffe im Sinne der erfindungsgemäßen Komponenten verwendet werden.

Generell ist zumindest eine mechanische Verbindung zwischen dem Basisbediengerät, d.h. der Sicherheits-Grundsteuervorrichtung und dem mobilen Endgerät vorgesehen. Die Sicherheits-Grundsteuervorrichtung ihrerseits ist im Allgemeinen mit einer Robotersteuerung steuerungstechnisch verbunden, derart, dass durch Betätigen der Sicherheits-Grundsteuervorrichtung, die Robotersteuerung angesteuert wird, um den Roboterarm angesteuert zu bewegen. Eine steuerungstechnische Verbindung zwischen Robotersteuerung, Basisbediengerät und mobilem Endgerät, wie der Tabletcomputer kann eine elektrische Verbindung sein. Dabei kann das Basisbediengerät entweder drahtlos oder drahtgebunden sicher mit der Robotersteuerung kommunizieren. Außerdem kann das mobile Endgerät, wie der Tabletcomputer, direkt drahtlos an die Robotersteuerung angebunden sein oder elektrisch mit dem Basisbediengerät gekoppelt sein und so die bereits bestehende Kommunikation des Basisbediengeräts zur Robotersteuerung mitnutzen. Die Befehle oder Signale, die über das mobile Endgerät, wie dem Tabletcomputer an die Robotersteuerung übertragen werden, können in sicherer Technik oder nichtsicherer Technik übertragen werden. Das Basisbediengerät mit seinen sicherheitsrelevanten Bedienfunktionalitäten, wie Notaus- oder Zustimmschalter muss jedoch sicher mit der Robotersteuerung verbunden sein. Eine drahtlose Schnittstelle des mobilen Endgeräts, wie dem Tabletcomputer kann auch am roboterfernen Arbeitsplatz für eine drahtlose Kommunikation beispielsweise mit einer externen Tastatur, Maus und/oder einem externen Monitor genutzt werden.

Die Erfindung kann also je nach Ausführungsform die beiden Welten von sicherer, zuverlässiger Industriesteuerung und fortschrittlicher, benutzerfreundlicher und leistungsstarker Konsumelektronik miteinander verbinden und damit neue Wege in der effizienten und einfachen Roboterbedienung und Robotersteuerung ermöglichen.

Diese Erfindung beschreibt das Grundkonzept sowie exemplarisch Ausführungsformen einer temporären Koppelung eines mobilen Endgeräts mit sicherheitsrelevanten roboter- und/oder anlagenspezifischen Bediengrundelementen, die auf einem Basisbediengerät, d.h. einer Sicherheits-Grundsteuervorrichtung, insbesondere auf einem zur Sicherheits-Grundsteuervorrichtung gehörenden Trägersystem befestigt sind.

Durch die technische Lösung einer mechanischen und steuerungstechnischen Kopplung, durch Anbindung eines mobilen Endgeräts, wie eines Tabletcomputers an eine Robotersteuerung um einen Roboter zu steuern, können entsprechend zwei Gerätetypen geschaffen werden, die sich zu drei Bedienszenarien kombinieren lassen.

Ein erstes Bedienszenario wird gebildet allein durch das Basisbediengerät bzw. allein durch die autark funktionsfähige Sicherheits-Grundsteuervorrichtung. In einem Standardzustand am Roboter befindet sich das Basisbediengerät sichtbar in unmittelbarer Nähe zum Roboter, d.h. an der Roboterzelle, so dass beispielsweise die Not-Aus-Funktionalität gut erkenn- und erreichbar ist.

Ein zweites Bedienszenario sieht die roboterunabhängige Nutzung des mobilen Endgeräts, beispielsweise des Tabletcomputer vor. Das mobile Endgerät kann an einem roboterfernen Arbeitsplatz oder unterwegs verwendet werden, beispielsweise um Daten auszuwerten oder Roboterprogramme vorzubereiten, zu erstellen, zu editieren oder offline auszutesten. Das mobile Endgerät kann dabei entweder ohne der erfindungsgemäßen Adaptervorrichtung gehandhabt werden oder mit der erfindungsgemäßen Adaptervorrichtung gehandhabt werden, wenn die Adaptervorrichtung an dem mobilen Endgerät befestigt bleibt, obwohl es von der Sicherheits-Grundsteuervorrichtung getrennt ist.

Das dritte Bedienszenario sieht eine erweiterte Roboterbedienung vor. Das mobile Endgerät ist in diesem Falle mechanisch und steuerungstechnisch mit dem Basisbediengerät, d.h. der Sicherheits-Grundsteuervorrichtung verbunden. In dieser Konfiguration kann der Roboter beispielsweise über benutzerindividuelle graphische Oberflächen des Touchscreens mit sehr umfangreicher Funktionalität intuitiv gesteuert und programmiert werden.

Grundsätzlich können die beiden Komponenten, d.h. das Basisbediengerät und das mobile Endgerät als jeweils eigenständige Geräte betrachtet und entwickelt werden. Dabei können diese über eine mechanische und insbesondere auch steuerungstechnische und/oder elektrische Schnittstelle auf einander abgestimmt sein.

Das Basisbediengerät, d.h. die Sicherheits-Grundsteuervorrichtung kann mit der Robotersteuerung steuerungstechnisch verbunden bleiben und auch physisch in der Nähe des Roboters, der Roboterzelle oder Roboteranlage verbleiben. Das Basisbediengerät, d.h. die Sicherheits-Grundsteuervorrichtung kann kabelgebunden oder drahtlos, jeweils in sicherer Technik, insbesondere gemäß EN ISO 10218-1 mit der Robotersteuerung verbunden sein. Wird dieses Basisbediengerät bzw. die Sicherheits-Grundsteuervorrichtung aus der konfigurierten Umgebung der Robotersteuerung entfernt, führt dies zu einem Not-Halt des Roboters, der Roboterzelle und/oder der Roboteranlage, es sei denn, sie wurde zuvor durch ein geeignetes Verfahren sicher abgemeldet. Das Basisbediengerät kann neben den wesentlichen Grundbedienelementen wie Not-Aus, Zustimmschalter, und Programm-Start auch zusätzliche Basisfunktionalitäten besitzen. Diese könnten beispielsweise sein, eine Taste für die Touch-Up-Funktion zum Teachen des Roboters, ein insbesondere kleines Display zur Anzeige von Statusmeldungen, Menüeinträgen oder Optionen, eine Taste zum Durchschalten eines einfachen Menüs, eine Taste zum Bestätigen einer Auswahl, z.B. eines manuellen Betriebs in Gelenkkoordinaten, einer zu aktivierenden Gelenkachse des Roboterarms, einer Programmauswahl, einer Bestätigung von Start und/oder Stopp. Eine Auswahl kann auch durch einen kombinierten Dreh-Druck-Taster erfolgen. Es kann weiterhin ein optisches Anzeigemittel, wie ein Leuchtmittel, bspw. eine LED, ein Lichtring und/oder ein Lichtstreifen zur Anzeige des Status vorhanden sein. Es können neben Bedienelementen auch Sensoren, beispielsweise Beschleunigungs-, Magnetfeldsensoren oder optische Sensoren, mit der Adaptervorrichtung mechanisch und/oder elektrisch verbunden werden.

Ziel ist dabei nicht das Basisbediengerät mit einem möglichst großen Umfang an Funktionalität auszustatten, sondern minimalistisch und kostengünstig eine einfache und intuitive Grundbedienung sicherzustellen. Demgegenüber besitzt dann aber das mobile Endgerät mit seiner individuellen und beliebig erweiterbaren Funktionalität, wie beispielsweise im Falle eines Tabletcomputers die Bedienoberfläche, eine sehr hohe Funktionalität und für den Bediener einen hohen temporären Wert am Roboter, wenn hier beispielsweise anspruchsvolle Programmier-, Einricht- oder Servicearbeiten durchgeführt werden sollen.

Je nach Ausführung des Basisbediengeräts bzw. der Sicherheits-Grundsteuervorrichtung und je nach Adaptierbarkeit an das Basisbediengerät kann das mobile Endgerät, insbesondere der Tabletcomputer entsprechend in einem Originalzustand direkt an dem Basisbediengerät bzw. an der Sicherheits-Grundsteuervorrichtung befestigt werden oder über die erfindungsgemäße Adaptervorrichtung mit dem Basisbediengerät bzw. der Sicherheits-Grundsteuervorrichtung mechanisch verbunden werden. Diese Adaptervorrichtung ist spezifisch auf das jeweilige Modell des mobilen Endgeräts, insbesondere des Tabletcomputers zugeschnitten.

Zusammenfassend bietet das erfindungsgemäße Roboter-Bedienhandgerät ganz neue Möglichkeiten den rasanten technischen Fortschritt in der Entwicklung von mobilen Endgeräten kostengünstig und sicher auch zur Bedienung von Robotern, insbesondere Industrierobotern, nutzen zu können, um neuartige und intuitive Ansätze in der Programmierung zu realisieren. Dazu kann ein System vorgesehen sein, welches aus einfachsten Elementen und Modulen so aufgebaut werden kann, dass es unabhängig von einzelnen Modellen eines mobilen Endgeräts universell nutzbar ist und trotzdem individuell auf die jeweilige Anwendung einfach zugeschnitten werden kann. Seine quasi unbegrenzte Wandel- und Erweiterbarkeit ist die Basis für die hohe Flexibilität und Vielseitigkeit dieses Systems zur Erweiterung von universellen Eingabegeräten durch sichere Bedienelemente.

Mehrere konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Darstellung eines Roboters aufweisend einen Roboterarm und eine Robotersteuerung, sowie ein erfindungsgemäßes Roboter-Bedienhandgerät,
- Fig. 2: eine erste Ausführungsform eines Roboter-Bedienhandgeräts mit einer Adaptervorrichtung in Form eines starren Rahmens,
- Fig. 3: eine zweite Ausführungsform eines Roboter-Bedienhandgeräts mit einer ansteckbaren Adaptervorrichtung,
- Fig. 4: eine dritte Ausführungsform eines Roboter-Bedienhandgeräts mit einer zerlegbaren bzw. aufklappbaren Adaptervorrichtung,
- Fig. 5-11: verschiedene Ausführungsformen eines Roboter-Bedienhandgeräts mit einer Adaptervorrichtung, die zwei gegeneinander verstellbare Bedienhandgeräteteile aufweist,
- Fig. 12-16: verschiedene Ausführungsformen eines Roboter-Bedienhandgeräts mit einer Adaptervorrichtung, die zwei gegeneinander verstellbare federvorgespannte Bedienhandgeräteteile aufweist,
- Fig. 17-24: verschiedene Ausführungsformen eines Roboter-Bedienhandgeräts mit einer Adaptervorrichtung, die elastische Komponenten aufweist,
- Fig. 25: eine vierte Ausführungsform eines Roboter-Bedienhandgeräts mit einer Adaptervorrichtung die Streben aufweist, und
- Fig. 26-30: eine fünfte Ausführungsform eines Roboter-Bedienhandgeräts mit einer Adaptervorrichtung die versetzbare, verstellbare und/oder austauschbare Abstandshalter aufweist.

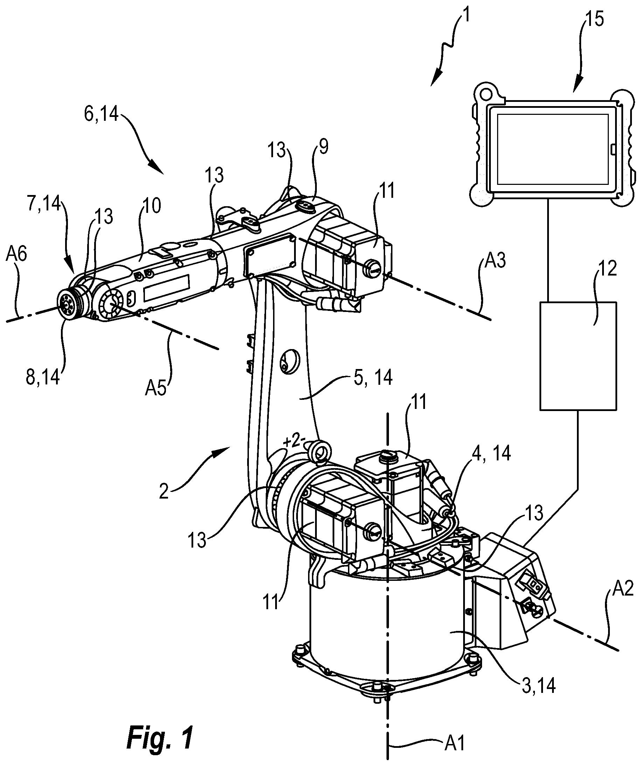

Die Fig. 1 zeigt einen Roboter 1, der einen Roboterarm 2 und eine Robotersteuerung 12 aufweist. Der Roboterarm 2 umfasst im Falle des vorliegenden Ausführungsbeispiels mehrere, nacheinander angeordnete und mittels Gelenke 13 verbundene Glieder 14. Bei den Gliedern 14 handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

Der Roboterarm 2 ist mittels dreier elektrischer Antriebsmotoren 11 in seinen drei Grundachsen und mittels dreier weiterer elektrischer Antriebsmotoren 11 in seinen drei Handachsen beweglich.

Die Robotersteuerung 12 des Roboters 1 ist ausgebildet bzw. eingerichtet, ein Roboterprogramm auszuführen, durch welches die Gelenke 14 des Roboterarms 2 gemäß des Roboterprogramms automatisiert oder in einem Handfahrbetrieb automatisch verstellt bzw. drehbewegt werden können. Dazu ist die Robotersteuerung 12 mit den ansteuerbaren elektrischen Antriebsmotoren 11 verbunden, die ausgebildet sind, die Gelenke 14 des Roboterarms 2 zu verstellen. Mit der Robotersteuerung 12 ist ein erfindungsgemäßes Roboter-Bedienhandgerät 15 steuerungstechnisch verbunden.

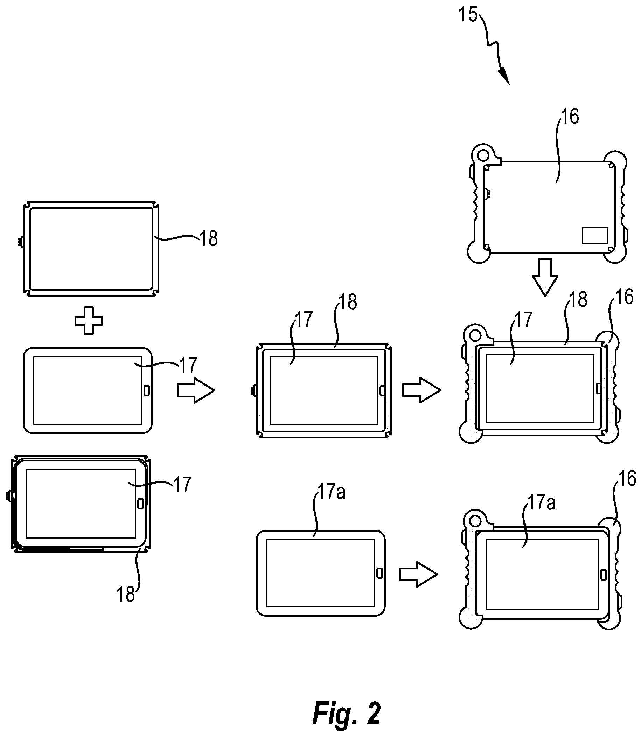

Die Fig. 2 zeigt den Aufbau einer ersten Ausführungsform eines Roboter-Bedienhandgeräts 15, das eine Sicherheits-Grundsteuervorrichtung 16, ein mobiles Endgerät 17 und einen Halter aufweist, der ausgebildet ist, das mobile Endgerät 17 an der Sicherheits-Grundsteuervorrichtung 16 zu befestigen. Der Halter bildet eine Adaptervorrichtung 18, die ausgebildet ist, das mobile Endgerät 17 mit der Sicherheits-Grundsteuervorrichtung 16 mechanisch und/oder elektrisch zu verbinden. Die Adaptervorrichtung 18 hat u.a. die Funktion eine definierte und einheitliche elektrische und/oder mechanische Schnittstelle zu gewährleisten, die unabhängig von der Tabletausprägung ist.

Die Adaptervorrichtung 18 ermöglicht es, statt eines größeren mobilen Endgeräts 17a, dass unmittelbar in die Sicherheits-Grundsteuervorrichtung 16 eingefügt werden könnte, auch ein kleineres mobile Endgerät 17 in die Sicherheits-Grundsteuervorrichtung 16 zu integrieren, und zwar indem das kleinere mobile Endgerät 17, wie dargestellt, mit der Adaptervorrichtung 18 ausgestattet wird, so dass das kleinere mobile Endgerät 17 zusammen mit der Adaptervorrichtung 18 passgenau in die Sicherheits-Grundsteuervorrichtung 16 eingesetzt werden kann. In einer solchen Ausführungsform ist das mobile Endgerät 17, vor allem als ein Tabletcomputer mit seinem großen einnehmenden Touchscreen dominant und für den optischen Eindruck maßgeblich. Darüber hinaus kann jedoch die Sicherheits-Grundsteuervorrichtung 16 alleine verwendet werden. In dieser ersten Ausführungsform ist die Adaptervorrichtung 18 als ein Adapterrahmen ausgebildet.

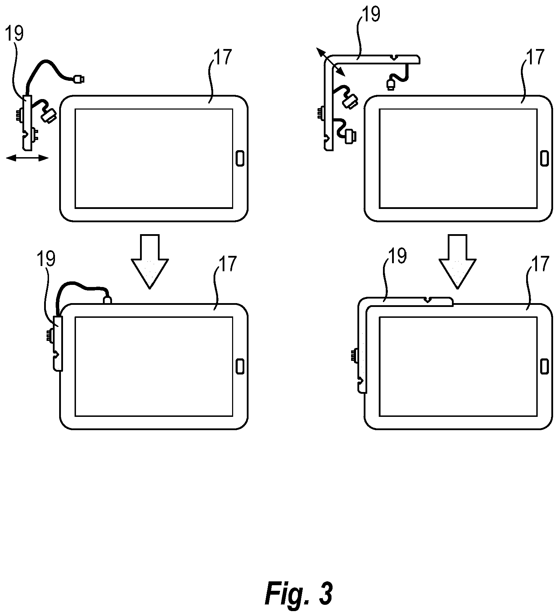

In der Fig. 3 sind zwei beispielhafte Varianten gezeigt, bei denen die Adaptervorrichtung 18 nicht als ein Adapterrahmen, sondern als stabförmige oder winkelförmige Adapteransatzstücke 19 ausgebildet sind. Dabei ist auch die Möglichkeit einer elektrischen Adaptierung angedeutet.

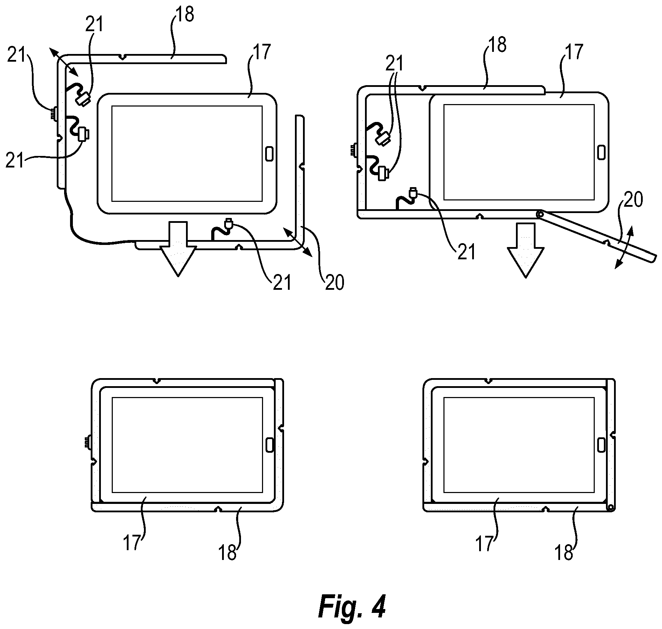

Die Fig. 4 zeigt den Aufbau einer dritten Ausführungsform eines Roboter-Bedienhandgeräts 15. Diese Adaptervorrichtung 18 weist wenigstens ein verstellbares Halteglied 20 auf, das ausgebildet ist, in einer Schließstellung des verstellbaren Halteglieds 20, wie in den unteren Darstellungen der Fig. 4 gezeigt, das mobile Endgerät 17 einzufassen, so dass es zusammen mit der Adaptervorrichtung 18 formschlüssig und/oder kraftschlüssig mit der Sicherheits-Grundsteuervorrichtung 16 (Fig. 2) zu verbinden ist und in einer Offenstellung des verstellbaren Halteglieds 20, wie in den oberen Darstellungen der Fig. 4 gezeigt, das mobile Endgerät 17 zu seiner Trennung von der Sicherheits-Grundsteuervorrichtung 16 (Fig. 2) mechanisch freigegeben ist, so dass es aus Adaptervorrichtung 18 entnommen werden kann. Die Adaptervorrichtung 18 kann über entsprechend kompatible elektrische Anschlussstecker 21 verfügen.

Die Funktion eines solchen Zwischen- oder Adapterrahmens ist, eine eindeutige und sichere mechanische und ggf. elektrische Schnittstelle zwischen Basisbediengerät, d.h. der Sicherheits-Grundsteuervorrichtung 16 und dem mobilen Endgerät 17, insbesondere dem Tabletcomputer bereitzustellen. Das zugrunde liegende Problem ist, dass die Positionen der Anschlüsse modellabhängig unterschiedlich sein können. Im Falle einer elektrischen Schnittstelle könnten beispielsweise Kabel von externen Tablet-Anschlüssen, wie USB, Netzwerk, Energie, Firewire, usw. in einem solchen schlanken Rahmen geführt und in einer einzigen proprietären Schnittstelle gebündelt werden. Die mechanische Kopplung kann über eine oder auch mehrere Schnittstellen erfolgen, die günstig auf dem Zwischenrahmen verteilt sind. Zudem könnte der Adapterrahmen auch eine Schutzfunktionalität aufweisen, wenn dieser beispielsweise stoßabsorbierende, dämpfende oder kratzfeste Oberflächen oder Strukturelemente besitzt und das mobile Endgerät 17 an gefährdeten Stellen umschließt.

Da der Adapterrahmen in dieser Ausführungsform fest mit dem mobilen Endgerät 17 verbunden ist und im Gebrauch nicht schnell entfernt und wieder hinzugefügt werden soll, ist es hier entscheidend, ein sehr schlankes und leichtes Design zu verwenden, welches sich an der Form und Größe des originalen mobilen Endgeräts 17 orientiert und diese nicht wesentlich verändert. Dies bewahrt die Handlichkeit und Mobilität sowie die gewohnte Haptik des mobilen Endgeräts 17.

Ein klassisches mobiles Endgerät 17, wie beispielsweise ein Tabletcomputer ist in Bezug auf die Handhabung hauptsächlich auf Mobilität und weniger auf Ergonomie hin ausgerichtet. Diese Ergonomie ist jedoch beim längeren Programmieren und Bedienen von Robotern ein entscheidender Faktor für ein angenehmes und ermüdungsfreies Arbeiten und betrifft im Wesentlichen das Greifen, Tragen und Halten des erweiterten Roboter-Bedienhandgeräts 15 sowie die Erreichbarkeit und Bedienbarkeit von Tasten und Schaltern. Auf Grund der Größe gewöhnlicher Ergonomie-Elemente wie beispielsweise Griffausprägungen, sind diese nicht am schlanken Adapterrahmen sondern am Basisbediengerät, d.h. an der Sicherheits-Grundsteuervorrichtung 16 vorzusehen.

Ein Adapterrahmen kann je nach Anforderung, Kopplungsprinzip, Universalität und Funktionalität verschiedene Ausprägungsformen besitzen. Alle Adapterrahmenelemente können Aussparungen oder spezielle Formelemente aufweisen, um darunterliegende Tablet-Bedientasten oder Anschlüsse weiterhin nutzen zu können.

In der ersten Ausführungsform gemäß Fig. 2 haben viele Flächen und Elemente der Sicherheits-Grundsteuervorrichtung 16 keine Funktionen, wenn dieses alleine ohne mobiles Endgerät 17 genutzt wird. Diese Bereiche erzeugen eher den Eindruck eines leeren Rahmens als den eines hochwertigen und durchdachten Basisbediengeräts.

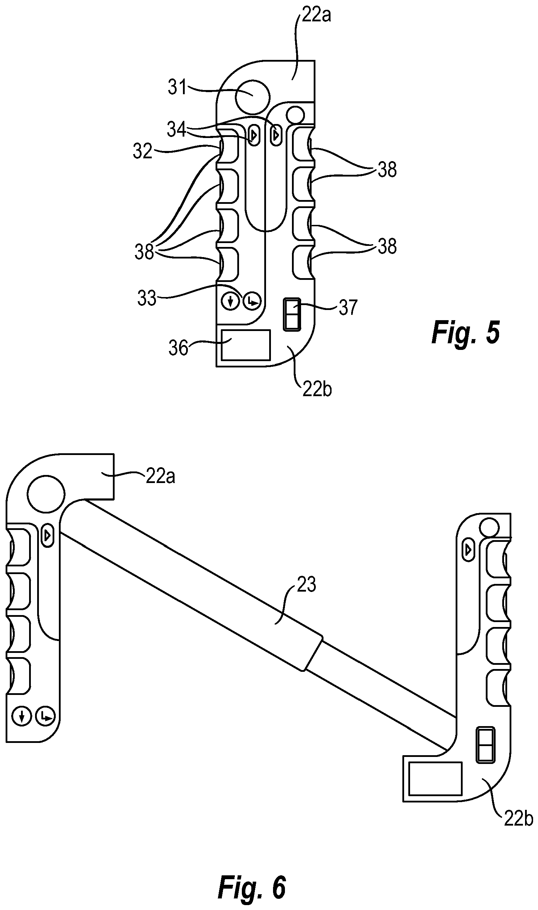

In der schematischen Darstellung der Sicherheits-Grundsteuervorrichtung 16 gemäß Fig. 5 bis Fig. 8 werden Funktionselemente, die nur zur Kopplung des mobilen Endgeräts 17 benötigt werden, im Einzelbetrieb der Sicherheits-Grundsteuervorrichtung 16 durch Verstellen wenigstens zweier Bedienhandgeräteteile 22a, 22b verdeckt und damit die Form der am Roboter 1 verbleibenden Sicherheits-Grundsteuervorrichtung 16 so verändert, dass sie als eine eigenständige formveränderte Einheit erscheint, wie in Fig. 5 gezeigt ist.

Bei dieser Ausführungsform weist die Sicherheits-Grundsteuervorrichtung 16 ein erstes Bedienhandgeräteteil 22a auf und wenigstens ein bezüglich des ersten Bedienhandgeräteteils 22a verstellbares zweites Bedienhandgeräteteil 22b auf, wobei die Bedienhandgeräteteile 22a, 22b derart, beispielsweise mittels einer längenveränderlichen Koppelstange 23, verstellbar miteinander gekoppelt sind, dass die Bedienhandgeräteteile 22a, 22b in einer Grundanordnung gemäß Fig. 5 ein konturreduziertes Roboter-Bedienhandgerät 15 bilden und in einer konturerweiterten Aufnahmeanordnung gemäß Fig. 6 bis Fig. 8, in der das zweite Bedienhandgeräteteil 22b von dem ersten Bedienhandgeräteteil 22a aus der Grundanordnung gemäß Fig. 5 verstellt angeordnet ist, das Roboter-Bedienhandgerät 15 zur Aufnahme des mobilen Endgeräts 17 durch die Adaptervorrichtung, welche in dieser Ausführungsform die beiden Bedienhandgeräteteile 22a, 22b und die längenveränderliche Koppelstange 23 umfasst, ausgestaltet ist.

Wie insbesondere die Fig. 5 zeigt, kann die Sicherheits-Grundsteuervorrichtung 16, insbesondere die Bedienhandgeräteteile 22a, 22b die folgenden Bedienelemente aufweisen. Ein Nothalt-Auslösemittel 31, eine Zustimmungseinrichtung 32, ein Betriebsartauswahlmittel 33, Start-Taster 34, Durchschalttaster 35 für Menüeinträge, ein einfaches elektronisches Display 36, Plus-Minus-Taste 37, beispielsweise zur manuellen Einzel-Achs-Ansteuerung.

Ergonomische Griffmulden 38 für Finger einer Hand eines Nutzers ermöglichen ein angenehmes und ermüdungsfreies Halten des Roboter-Bedienhandgeräts 15, sowohl in der konturreduzierten Anordnung gemäß Fig. 5, als auch in der konturerweiterten Anordnung gemäß Fig. 6 bis Fig. 8.

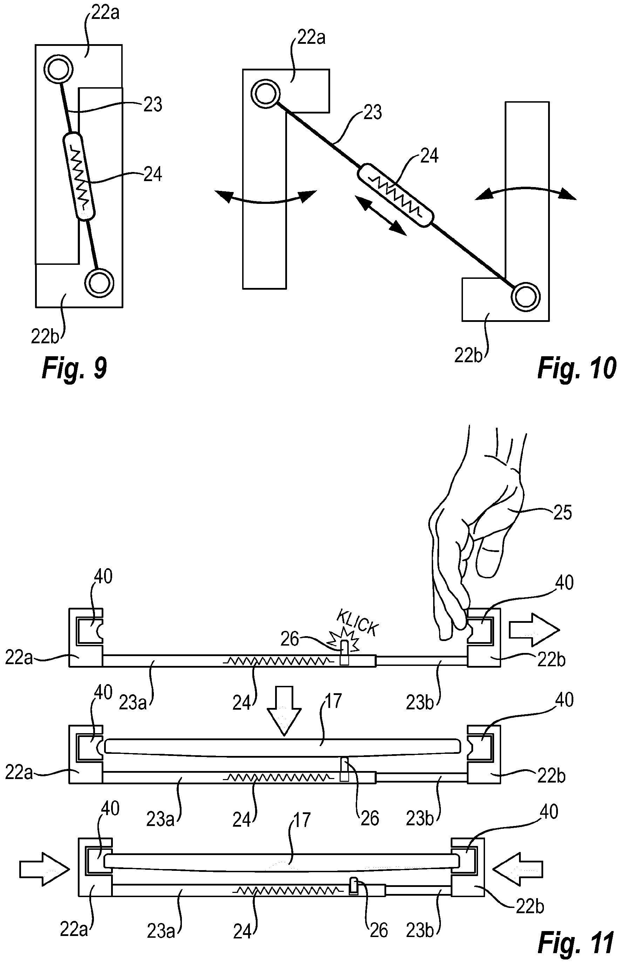

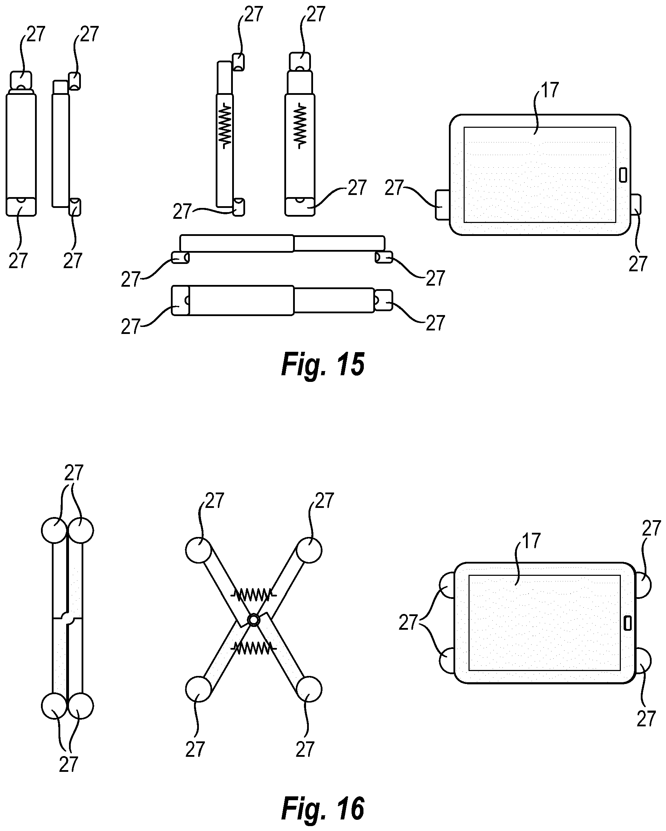

Zur einfachen teilgeführten Relativbewegung der beiden Bedienhandgeräteteile 22a, 22b kann entsprechend Fig. 9 bis Fig. 11 die längenveränderliche Koppelstange 23 ein Schubgelenk aufweisen. Dieses kann ausgeführt sein, als Linearführung oder Teleskopschiene, oder schwenkbare Glieder (Fig. 16), die mit den Bedienhandgeräteteilen 22a, 22b verbunden sind. Das Schubgelenk kann mittels einer Federvorrichtung 24 federrückgestellt ausgeführt sein, so dass das mobile Endgerät 17 im eingesetzten Zustand zwischen den beiden Seiten beispielsweise in einer Nut mit elastisch anschmiegsamen Kontaktelementen 40 gehalten wird. Zum einfachen Einlegen des mobilen Endgeräts 17 kann das Schubgelenk im auseinandergezogenen Zustand einrasten, wie dies in Fig. 11 veranschaulicht ist. Diese Blockierung wird in dieser Variante beim Kontakt mit dem mobilen Endgerät 17 wieder selbsttätig aufgehoben, so dass das Schubgelenk federbetätigt, gedämpft zusammengezogen wird und das mobile Endgerät 17 sicher zwischen zwei Ecken aufnimmt.

Elektrische Leitungen, insbesondere Kabel können intern in der längenveränderlichen Koppelstange 23, insbesondere im Schubgelenk hindurchgeführt werden.

Die Glieder des Schubelements können im gekoppelten Zustand hinter dem mobilen Endgerät 17 liegen und können ebenfalls mit Haltegriffen, Schlaufen oder weiteren Tasten (nicht dargestellt) ausgestattet sein, die ein ergonomisch angenehmes Tragen und Bedienen des erweiterten Roboter-Bedienhandgeräts 15 ermöglichen.

Die hier beispielhaft gewählten Kinematiken ermöglichen die schnelle Adaptierbarkeit der Sicherheits-Grundsteuervorrichtung 16, bzw. des Basisbediengeräts an unterschiedliche Grundabmessungen und -modelle des mobilen Endgeräts 17. Die Aufnahme von unterschiedlich dicken mobilen Endgeräten 17, die insbesondere auch unterschiedliche Kantenformen aufweisen können, wird durch austauschbare anschmiegsame Kontaktelemente 40 realisiert.

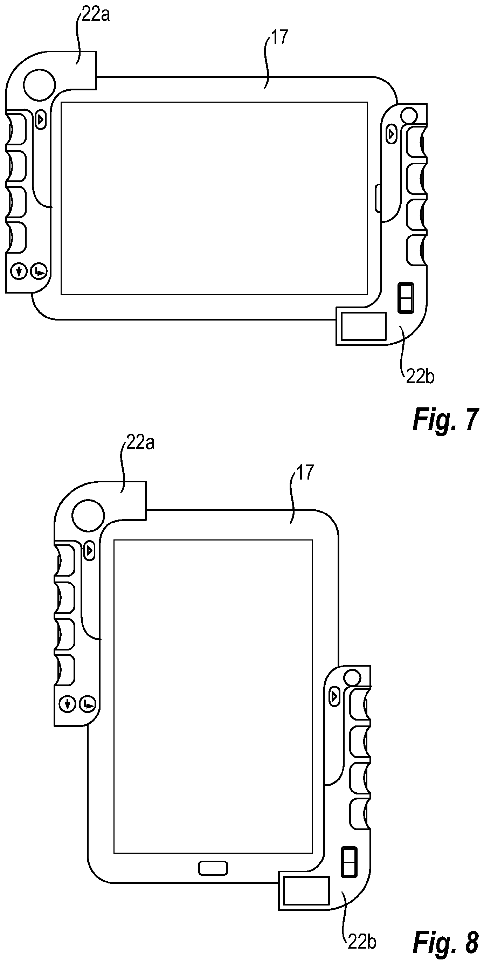

Je nach Aufbau der Bediensoftware oder Vorlieben des Benutzers kann das mobile Endgerät 17 hochkant (Fig. 8) oder quer (Fig. 7) ausgerichtet verwendet werden. Das flexible Verstellkonzept des Basisbediengeräts ermöglicht eine schnelle Anpassung der Halterung an die jeweilige Bedienausrichtung.

Eine spezielle Variante einer längenveränderlichen Koppelstange 23 ist in Fig. 9 bis Fig. 11 veranschaulicht. Die längenveränderliche Koppelstange 23 ist mit einer Federvorrichtung 24 versehen, welche ausgebildet ist, in der konturerweiterten Aufnahmeanordnung gemäß Fig. 10 eine Federkraft zu speichern, so dass die längenveränderliche Koppelstange 23 selbsttätig in die konturreduzierte Anordnung gemäß Fig. 9 zurückbewegt wird, wenn das mobile Endgerät 17 entnommen ist. Aus der konturreduzierten Anordnung gemäß Fig. 9 kann dann ein Benutzer mittels seiner Hand 25 die längenveränderliche Koppelstange 23 ausziehen, so dass die Federvorrichtung 24 wieder gespannt wird. damit das zweite Bedienhandgeräteteil 22b nicht ungewollt wieder in die konturreduzierten Anordnung gemäß Fig. 9 zurückspringt, kann ein Verriegelungsmittel 26, beispielsweise in Form eines Raststiftes, vorgesehen sein, welches in der konturerweiterten Aufnahmeanordnung gemäß Fig. 10 zwei gegeneinander verstellbare Stangenteile 23a, 23b der längenveränderlichen Koppelstange 23 formschlüssig gegeneinander arretiert.

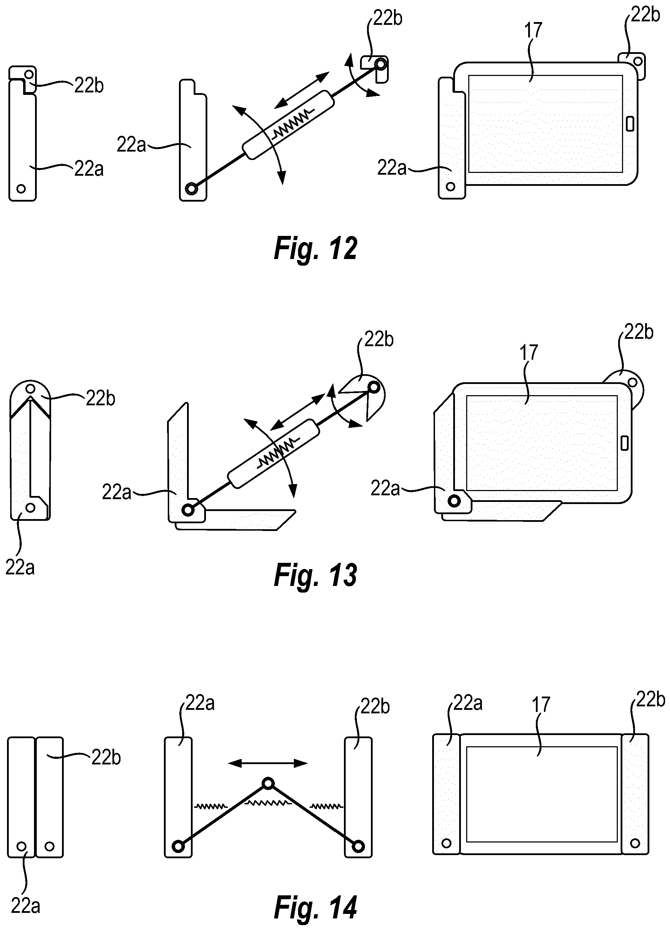

Wie in Fig. 12 bis Fig. 14 dargestellt, können die beiden Bedienhandgeräteteile 22a, 22b unterschiedliche Gestalten, Größen und/oder Konturformen aufweisen und durch eine Koppelstange 23, insbesondere mit einer Federvorrichtung 24, gegeneinander verstellbar ausgebildet sein. In den konturreduzierten Anordnungen können die Sicherheits-Grundsteuervorrichtungen 16, wie in den jeweiligen linken Darstellungen gezeigt, unterschiedliche optische Erscheinungsformen annehmen und in den konturerweiterten Aufnahmeanordnungen, wie in den jeweiligen rechten Darstellungen gezeigt, das mobile Endgerät 17 randseitig einfassen.

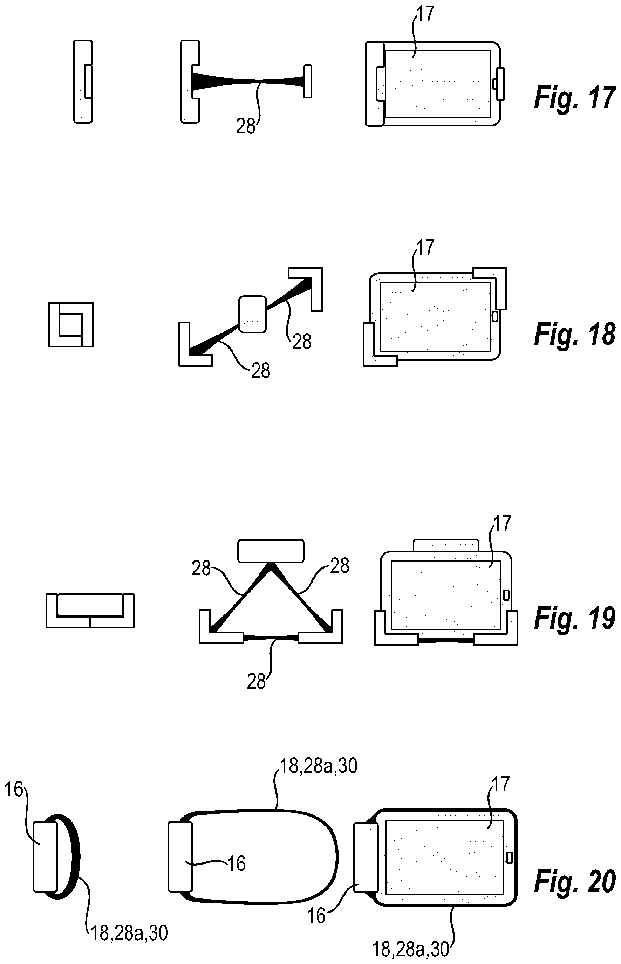

Die weiteren Ausführungen gemäß Fig. 15 bis Fig. 20 zeigen schematisch in Übersichten, wie eine Sicherheits-Grundsteuervorrichtung 16 prinzipiell aufgebaut sein kann, um ein mobiles Endgerät 17 mittels unterschiedlichster Adaptervorrichtungen 18 tragen zu können. Dabei wird im Wesentlichen die Grundaufteilung der Sicherheits-Grundsteuervorrichtungen 16 unterschieden, welche entweder aus einem einzelnen Grundkörper oder mehreren Trägersegmenten 27 bestehen kann. Die Trägersegmente 27 sind dabei relativ zueinander beweglich, indem diese entweder gelenkig, wie in Fig. 16 veranschaulicht, oder elastisch, wie in Fig. 17 bis Fig. 20 veranschaulicht, miteinander gekoppelt sind.

Die Bewegung kann dabei drehend, schiebend, schraubend, wälzend oder kombiniert aus den Elementarbewegungen mit einem Freiheitsgrad zwangsgeführt oder mehrdimensional frei in der Ebene, im Raum oder in der Sphäre erfolgen. Werden elastisch verformbare Elemente 28 verwendet, kann die Sicherheits-Grundsteuervorrichtungen 16 entweder teil- oder komplettelastisch aufgebaut werden. D.h. die Sicherheits-Grundsteuervorrichtungen 16 kann aus einer Kombination aus starren/ unnachgiebigen Segmenten/ Körpern, die elastisch miteinander verbunden sind, bestehen oder es kann auch komplett verformbar sein, beispielsweise indem der Grundkörper der Sicherheits-Grundsteuervorrichtungen 16 ein homogenes oder heterogenes elastisches Verhalten besitzt.

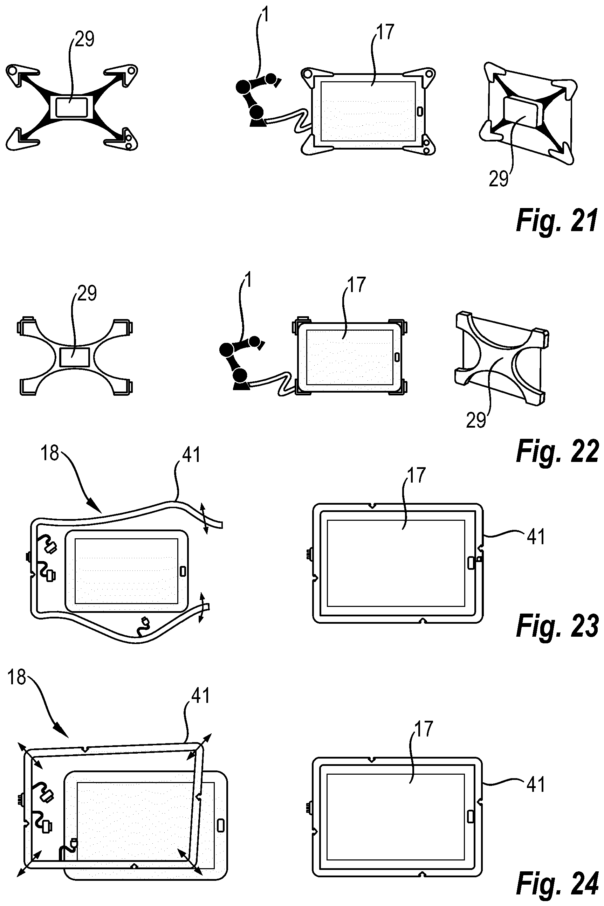

Zudem kann der Aufbau, wie in Fig. 21 und Fig. 22 schematisch dargestellt, von einem zentralen Mittelsegment 29 ausgehen, welches die Sicherheits-Grundsteuervorrichtung 16 aufweist und welches z.B. sowohl das geometrische/mechanische als auch das elektro-/steuerungstechnische Zentrum einer sternförmigen Anordnung bildet. Die zentralen Mittelsegmente 29, die sich hinter dem mobilen Endgerät 17 befinden können, können zudem mit Griff-, Halte- oder Schlaufenelementen ausgestattet sein, die ein ergonomisches Halten des Roboter-Bedienhandgeräts 15 unterhalb bzw. in der Nähe des Schwerpunkts ermöglichen.

Im Falle eines elastisch verformbaren Elements 28 kann dieses, wie in Fig. 20 gezeigt, eine Art Ringstruktur 30 mit einer dezentralen Sicherheits-Grundsteuervorrichtung 16 aufweisen. Die Adaptervorrichtung 18 weist in dieser ausführungsform wenigstens ein elastisch verformbares Halteglied 28a auf, das ausgebildet ist, das mobile Endgerät 17 unter elastischer Vorspannung mit der Sicherheits-Grundsteuervorrichtung 16 zu verbinden.

In der Ausführungsvariante der Fig. 23 kann die Adaptervorrichtung 18 ein elastisches Rahmenband 41 aufweisen. Das elastische Rahmenband 41 kann ein Elastomerband sein und ggf. mit einem Drahtkern versehen sein. Es kann entsprechend der Abmessungen, d.h. des Umfangs des jeweiligen mobilen Endgeräts 17 abgelängt, um dessen Außenrand gelegt und an den offenen Enden verbunden werden. Das elastische Rahmenband 41 kann einen Hohlkern zur Durchleitung eines oder mehrerer Kabel aufweisen.

In der Ausführungsvariante der Fig. 24 kann die Adaptervorrichtung 18 ein elastischer oder teilelastischer Adapterrahmen sein. Ein solcher geschlossener Strukturrahmen schmiegt sich vollständig oder teilweise elastisch der Kontur des jeweiligen mobilen Endgeräts 17 an. Beispielsweise durch Einklicken in den Kunststoffrahmen oder durch Überstülpen einer Kunststoffhülle, insbesondere Silikonhülle.

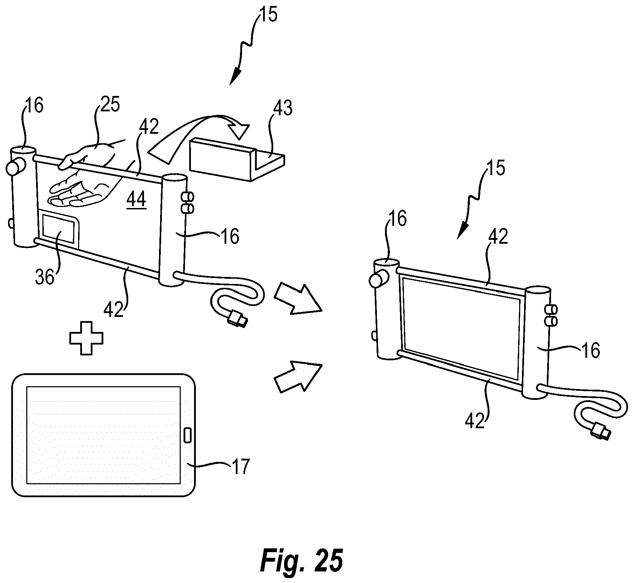

Die in Fig. 25 dargestellte vierte Ausführungsform eines Roboter-Bedienhandgeräts 15 zeigt Streben 42, die für die Stabilität des Basisbediengeräts, d.h. zweier stabförmiger Teile der Sicherheits-Grundsteuervorrichtung 16 im erweiterten Zustand sorgen, indem diese die beiden stabförmigen Teile der Sicherheits-Grundsteuervorrichtung 16 mechanisch miteinander verbinden. Im Einzelbetrieb, also ohne das mobile Endgerät 17, können die Streben 42 eine andere Funktion besitzen, wie beispielsweise Tragen mittels der Hand 25 eines Benutzers, Halten oder Aufhängen auf einem Wandhalter 43. Daneben können die stabförmigen Teile der Sicherheits-Grundsteuervorrichtung 16 und die Streben 42 eine Fensteröffnung 44 bilden, in welche das elektronische Display 36 der Sicherheits-Grundsteuervorrichtung 16 hineinragen kann.

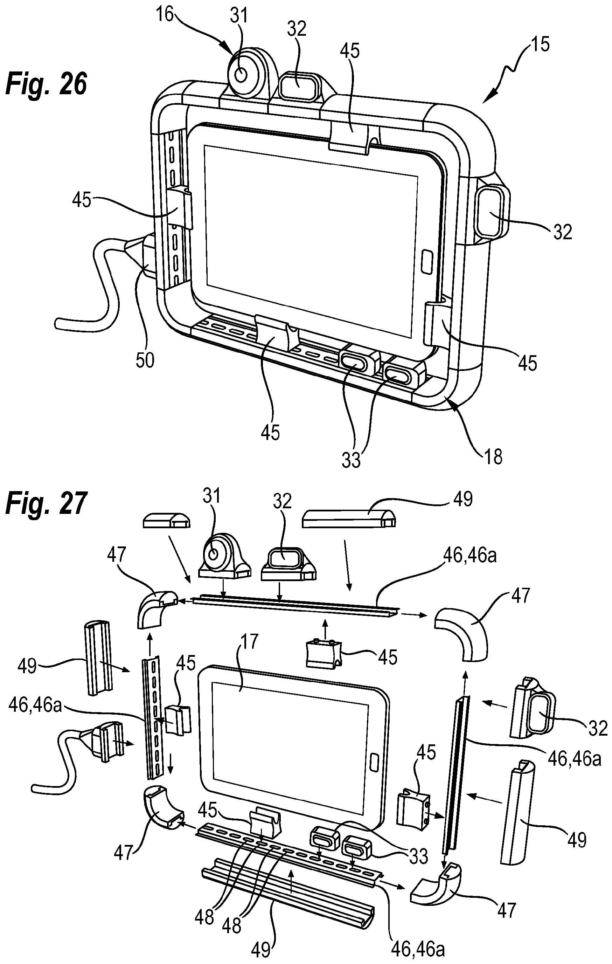

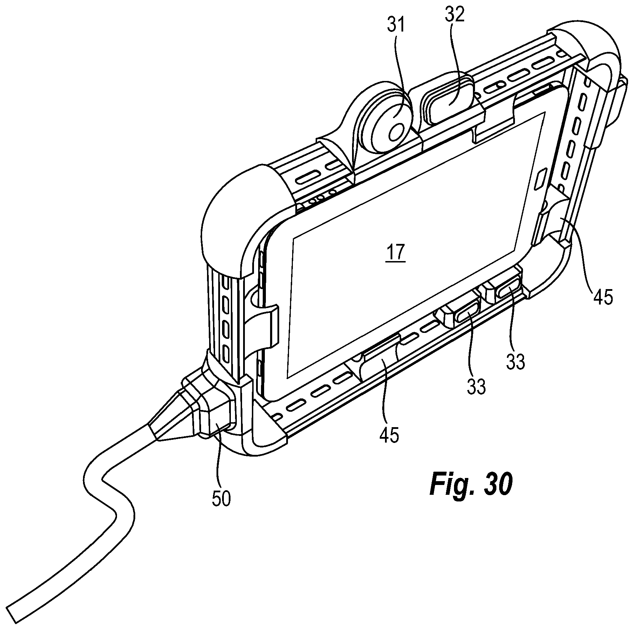

In Fig. 26 bis Fig. 30 ist eine fünfte Ausführungsform eines Roboter-Bedienhandgeräts 15 mit einer Adaptervorrichtung 18 dargestellt, die versetzbare, verstellbare und/oder austauschbare Abstandshalter 45 aufweist.

Die Adaptervorrichtung 18 dieser fünften Ausführungsform weist einen mehrteiligen Rahmen auf, der aus Einzelstreben 46, insbesondere geraden Einzelstreben 46 und die Einzelstreben 46 verbindende Eckverbindern 47 aufgebaut ist.

Wie insbesondere die Fig. 27 zeigt, sind die Einzelstreben 46 als Schienen 46a ausgebildet, an denen die Abstandshalter 45, welcher einen Randabschnitt des mobile Endgeräts 17 formschlüssig und/oder kraftschlüssig umfassen, entlang der Längserstreckung der Schienen 46a verstellbar gelagert sind. Die Einzelstreben 46 weisen außerdem mehrere entlang der Längserstreckung der Einzelstreben 46 in Abständen, insbesondere in gleichen Abständen voneinander angeordnete Befestigungsstellen 48 auf, wobei die Abstandshalter 45, welche einen Randabschnitt des mobilen Endgeräts 17 formschlüssig und/oder kraftschlüssig umfassen, an jeweils einer dieser Befestigungsstellen 48 befestigt sind.

Die Sicherheits-Grundsteuervorrichtung 16 ist an wenigstens einer der Einzelstreben 46 bzw. der Schienen 46a befestigt.

Diese fünfte Ausführungsform soll es ermöglichen, mobile Endgeräte 17 aus der Konsumelektronik, insbesondere Tabletcomputer zur Bedienung und Programmierung von Robotern im industriellen Einsatz zu verwenden. Dadurch sollen Kosten der Bediengeräteentwicklung wegfallen, die Anpassung an den jeweils aktuellen Stand der Technik beschleunigt und die flexible, d.h. an die konkrete Applikation bzw. an die Verfügbarkeit der Roboter-Bedienhandgeräte 15 angepasste Bediengeräteauswahl ermöglicht werden. Ziel ist dabei jedoch nicht ein bestimmtes Gerät oder eine bestimmte Baureihe verwenden zu können, sondern mit dieser fünften Ausführungsform soll ein breites herstellerübergreifendes Spektrum an mobilen Endgeräten 17 als Eingabegeräte für die Roboterbedienung und Programmierung nutzbar gemacht werden.

So kann nahezu jedes nicht-sichere mobile Endgerät 17, wie beispielsweise ein Tabletcomputer zu einem Roboterbedienhandgerät 15 mit sicheren Bedienelementen in Form einer Sicherheits-Grundsteuervorrichtung 16 erweitert werden. Insbesondere werden hier bevorzugte konstruktive Lösungen vorgeschlagen. Die Erweiterung soll zudem helfen, die Industrietauglichkeit des Roboterbedienhandgeräts 15, insbesondere des darin aufgenommenen mobilen Endgeräts 17, insbesondere hinsichtlich Fallschutz und Ergonomie zu erhöhen.

Ein Grundgedanke basiert auf einem Baukasten für ein Rahmensystem, welches einfach und kostengünstig, individuell an ein beliebiges, insbesondere rechteckiges mobiles Endgerät 17 angepasst werden kann. Eine wichtige Herausforderung ist dabei, die Zugänglichkeit der am mobilen Endgerät 17, wie ein Tabletcomputer, befindlichen Bedienelemente und Anschlüsse, wie Ein-/Ausschalter, USB-Ports und Ähnliches zu gewährleisten.

Der umschließende Rahmen aufweisend die Einzelstreben 46 bzw. die Schienen 46a und die Eckverbinder 47 übernimmt dabei nicht nur eine Schutzfunktion des mobilen Endgeräts 17, sowie deren Halte- und Handhabungsfunktionen sondern bietet durch seinen Aufbau auch Anbindungsmöglichkeiten von roboterspezifischen Hardwarekomponenten, wie Nothalt-Auslösemittel 31, Zustimmungseinrichtungen 32 oder Betriebsartauswahlmittel 33. Diese einzelnen Hardwarekomponenten, wie Nothalt-Auslösemittel 31, Zustimmungseinrichtungen 32 oder Betriebsartauswahlmittel 33, können in separaten Gehäusen enthalten sein, und die mehreren Gehäuse zusammen die Sicherheits-Grundsteuervorrichtung 16 bilden, in dem die separaten Gehäuse an den Einzelstreben 46 bzw. den Schienen 46a und/oder den Eckverbindern 47 befestigt sind.

Die Herausforderung, ein möglichst breites Spektrum an unterschiedlichen Gerätemodellen nutzen zu können, wird über den Aufbau als einem solchen Baukastensystem einfach und wirtschaftlich effizient realisiert. Hierzu werden ausschließlich einfache und kostengünstige Standardkomponenten verwendet, die nicht auf das jeweilige Gerätemodell zugeschnitten und beschränkt sind. So können durch Kombination und Anordnung von wenigen unterschiedlichen Bauteile, wie Einzelstreben 46 bzw. den Schienen 46a und/oder den Eckverbindern 47 viele unterschiedliche Varianten aufgebaut werden, die speziell für die jeweilige Aufgabe und Anwendung schnell konfiguriert werden können.

Das Rahmenmodul kann dabei durch seine feste Tragstruktur Schutz-, Halte- und Trägerfunktion erfüllen. Es wird wenigstens gebildet durch die Einzelstreben 46 bzw. die Schienen 46a und die Eckverbindern 47. Als Profilträger, d.h. als Einzelstreben 46 bzw. die Schienen 46a können beispielsweise kostengünstige, insbesondere allgemein bekannte Hutschienen verwendet werden, die neben mechanischer Stabilität auch eine genormte Verbindungsschnittstelle bietet. Über einfaches ineinanderschieben rasten die Einzelstreben 46 bzw. die Schienen 46a in den vier Eckverbindern 47 ein und bilden einen geschlossenen Rahmen, an dessen Innenseite mehrere, insbesondere mindestens vier Abstandshalter 45 vorgesehen sind.

Die Abstandshalter 45 können dabei einen festen Grundkörper aufweisen, der einen definierten Abstand zwischen dem mobilen Endgerät 17 und den Einzelstreben 46 bzw. den Schienen 46a gewährleistet und dabei Haltekräfte übertragen kann. Zwischen jeweils einem Abstandshalter 45 und dem mobilen Endgerät 17 kann ein Kontaktelement eingefügt sein, das aus einem weichen Elastomer-Werkstoff besteht. Dieses Kontaktelement passt sich bei leichtem Druck an die Form der Kante des jeweiligen mobilen Endgeräts 17 an und stellt eine definierte mechanische Verbindung zum Rahmen, d.h. zur Sicherheits-Grundsteuervorrichtung 16 sicher.

Je nach Gestaltung der Abstandshalter 45 können diese beispielsweise auch zusätzlich die Funktionen der Absorption der Stoßenergie beim Fall oder die Aufnahme von Bedien- oder Anzeigeelementen besitzen.

Der Grundaufbau aus Einzelstreben 46 bzw. Schienen 46a und Eckverbindern 47, sowie den Abstandshaltern 45 umschließt entsprechend das mobile Endgerät 17. Je nach Aufgabe und Anwendung kann der Hersteller oder der Benutzer die Adaptervorrichtung 18 individuell konfigurieren. Bedienelemente können beispielsweise außenliegend und/oder innenliegend an den Einzelstreben 46 bzw. den Schienen 46a befestigt werden. Hierzu kann die genormte Profilschiene oder eine Langlochperforierung der Hutschiene genutzt werden. Neben Nothaltauslösemitteln 31 können auch weitere Taster und/oder kleine Zusatzdisplays und/oder Leuchten für Statusanzeigen integriert werden. An einem Anschlussstecker 50 können sämtliche Signale und Energieleitungen des Roboter-Bedienhandgeräts 15 gesammelt und gebündelt nach außen geführt werden.

Neben den elektrischen Bedienelementen können auch rein mechanische Bedienelemente hinzugefügt werden. Diese nicht dargestellten Elemente können beispielsweise der besseren Handhabung des Roboter-Bedienhandgeräts 15 dienen. Griffelemente, Trageschlaufen und/oder klassische Griffdome können insoweit an einem solchen Roboter-Bedienhandgerät 15 ausgebildet sein.

Frei gebliebene Abschnitte der Einzelstreben 46 bzw. Schienen 46a können mit Profilabdeckungen 49 versehen sein. Diese Profilabdeckungen 49 können beispielsweise kostengünstig von einem langen Kunststoff-Strangprofil passgenau zugeschnitten werden. Diese Profilabdeckungen 49 können beispielsweise einfach von oben über die Einzelstreben 46 bzw. Schienen 46a geschoben werden und/oder rasten in diese ein. Die Profilabdeckungen 49 können aus einem nachgiebigen Kunststoff bestehen, welcher einerseits ein ergonomisch angenehmes Halten des Rahmens in der Hand 25 ermöglicht und andererseits eine Stoßabsorption durch Materialdämpfung im Sturzfall bieten kann. Aus Ergonomie- und Designgründen können die Profilabdeckungen 49 in die Form der Eckverbinder 47 übergehen. Das Material bzw. der Aufbau der Eckverbinder 47 kann so gewählt sein, dass es dem Rahmen sowohl Festigkeit verleiht, als auch Stoßenergie aufnehmen und abbauen kann.

Ebenso ist es möglich, elektrische Eingabemittel, wie Tasten oder Bedienelemente im Griffrahmen unter den Profilabdeckungen 49 zu platzieren, die durch ein Zusammendrücken oder Eindrücken des weichen Materials der jeweiligen Profilabdeckung 49 betätigt werden können.

Alternativ können die Profilabdeckungen 49 mit einer drucksensitiven Oberfläche versehen sein, mit der sowohl die Dämpfung bei Fall als auch eine Betätigung der Bedienelemente in sicherer Technik realisierbar ist.

Aus ästhetischen und haptischen Gründen kann auch eine einfache Abdeckung der freien Einzelstreben 46 bzw. Schienen 46a in der Rahmeninnenseite vorgesehen sein.

Der Aufbau eines Baukastensystems kann wie folgt geschehen. Hierzu kann zunächst das mobile Endgerät 17 in den Rahmen von Einzelstreben 46 bzw. Schienen 46a und Eckverbindern 47 intergiert und über Anbau- und Bedienelemente anwendungsspezifisch erweitert werden. Abschließend werden freie Profilträgerbereiche mit Profilabdeckungen 49 versehen.

Die Universalität und Vielseitigkeit des Baukastensystems wird durch die freie Wandel- und Anpassbarkeit des Aufbaus realisiert. Für den Grundaufbau werden die Einzelstreben 46 bzw. die Schienen 46a von einem Strangmaterial abgelängt. Die Hauptabmessungen des Rahmens werden über die Größe des Roboter-Bedienhandgeräts 15, sowie über den Abstand zwischen dem mobilen Endgerät 17 und dem Rahmen definiert. Hierbei besteht die Möglichkeit über einen breiten Abstandshalter 45 einen breiten Spalt zu erzeugen oder über einen kurzen Abstandshalter 45 den Rahmen am Rand des mobilen Endgeräts 17 nahezu anliegen zu lassen. Die Abstandshalter 45 können ggf. innenliegend im Rahmen frei verschoben und positioniert werden, so dass sie keine Tasten oder Anschlüsse des mobilen Endgeräts 17 verdecken.

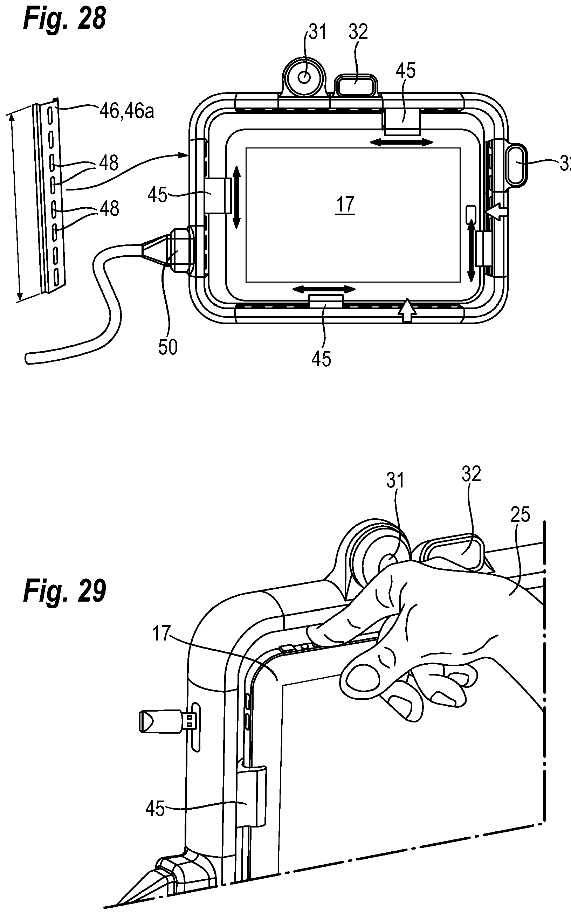

Die Bedien-, bzw. die Erreichbarkeit der Tasten durch den Bediener mittels seiner Hand, kann, wie insbesondere in Fig. 29 illustriert, am Rand durch den Spalt sichergestellt sein, der durch die Abstandshalter 45 definiert wird. Datenanschlüsse wie USB-Anschluss oder Firewire-Anschluss können entweder über einen Winkeladapter im Spalt nach vorne geführt werden oder über eine zusätzliche Aussparung im Rahmen standardgemäß genutzt werden.

Die Energie- und Signalleitungen der zusätzlichen Bedienelemente können im Profilträger und durch die Eckverbindern 47 zum Anschlussstecker 50 geführt werden. Dieses bündelt die Kabel in einer Schnittstelle. Ebenso können auch die Daten- und Energieleitungen des Roboter-Bedienhandgeräts 15, wie beispielsweise Strom, Netzwerk und Bildschirmkabel), über diese Schnittstelle gebündelt nach außen geführt werden. Hierzu können auch Adapterkabel innerhalb der Rahmenstruktur geführt und von den Profilabdeckungen 49 und den Eckverbindern 47 verdeckt werden.

## Patentansprüche

1. Roboter-Bedienhandgerät, aufweisend eine Sicherheits-Grundsteuervorrichtung (16), ein mobiles Endgerät (17) und einen Halter, der ausgebildet ist, das mobile Endgerät (17) an der Sicherheits-Grundsteuervorrichtung (16) zu befestigen, wobei der Halter wenigstens eine Adaptervorrichtung (18) aufweist, die ausgebildet ist, das mobile Endgerät (17) mit der Sicherheits-Grundsteuervorrichtung (16) mechanisch zu verbinden, **dadurch gekennzeichnet, dass** die Sicherheits-Grundsteuervorrichtung (16) ein erstes Bedienhandgeräteteil (22a) aufweist und wenigstens ein bezüglich des ersten Bedienhandgeräteteils (22a) verstellbares zweites Bedienhandgeräteteil (22b) aufweist, wobei die Bedienhandgeräteteile (22a, 22b) derart verstellbar miteinander gekoppelt sind, dass die Bedienhandgeräteteile (22a, 22b) in einer Grundanordnung ein konturreduziertes Roboter-Bedienhandgerät (15) bilden und in einer konturerweiterten Aufnahmeanordnung, in der das zweite Bedienhandgeräteteil (22b) von dem ersten Bedienhandgeräteteil (22a) aus der Grundanordnung verstellt angeordnet ist, das Roboter-Bedienhandgerät (15) zur Aufnahme des mobilen Endgeräts (17) durch die Adaptervorrichtung (18) ausgestaltet ist.

2. Roboter-Bedienhandgerät nach Anspruch 1, bei dem die Adaptervorrichtung (18) wenigstens ein verstellbares Halteglied (20) aufweist, das ausgebildet ist, in einer Schließstellung des verstellbaren Halteglieds (20) das mobile Endgerät (17) formschlüssig und/oder kraftschlüssig, insbesondere zumindest an zwei diagonal gegenüberliegenden Ecken des mobilen Endgeräts (17) mit der Sicherheits-Grundsteuervorrichtung (16) zu verbinden und in einer Offenstellung des verstellbaren Halteglieds (20) das mobile Endgerät (17) zu seiner Trennung von der Sicherheits-Grundsteuervorrichtung (16) mechanisch freizugeben.

3. Roboter-Bedienhandgerät nach Anspruch 1 oder 2, bei dem die Sicherheits-Grundsteuervorrichtung (16), insbesondere das erste Bedienhandgeräteteil (22a) und/oder das zweite Bedienhandgeräteteil (22b) wenigstens ein Nothalt-Auslösemittel (31), wenigstens eine Zustimmungseinrichtung (32), wenigstens ein Betriebsartauswahlmittel (33) und/oder ein Anzeigemittel, insbesondere ein elektronisches Display (36) aufweist.

4. Roboter-Bedienhandgerät nach Anspruch 3, bei dem die Sicherheits-Grundsteuervorrichtung (16) ausgebildet und/oder eingerichtet ist, in der Grundanordnung durch das wenigstens eine Nothalt-Auslösemittel (31), die wenigstens eine Zustimmungseinrichtung (32), und/oder das wenigstens eine Betriebsartauswahlmittel (33) angesteuert zu werden.

5. Roboter-Bedienhandgerät nach einem der Ansprüche 1 bis 4, bei dem das erste Bedienhandgeräteteil (22a) und/oder das zweite Bedienhandgeräteteil (22b) die Adaptervorrichtung (18) bildet, insbesondere das erste Bedienhandgeräteteil (22a) und/oder das zweite Bedienhandgeräteteil (22b) das verstellbare Halteglied (20) aufweist.

6. Roboter-Bedienhandgerät nach einem der Ansprüche 1 bis 5, bei dem die Adaptervorrichtung (18) wenigstens ein elastisch verformbares Halteglied (28a) aufweist, das ausgebildet ist, das mobile Endgerät (17) unter elastischer Vorspannung mit der Sicherheits-Grundsteuervorrichtung (16) zu verbinden.

7. Roboter-Bedienhandgerät nach Anspruch 6, bei dem das elastisch verformbare Halteglied (28a) zur Bildung eines flexiblen Rahmens aus einem abgelängten Abschnitt eines Strangmaterials, insbesondere eines elastischen Kunststoff-Strangprofils hergestellt ist.

8. Roboter-Bedienhandgerät nach einem der Ansprüche 1 bis 7, bei dem die Adaptervorrichtung (18) wenigstens ein austauschbares Halteglied (45a), insbesondere ein rahmenförmiges austauschbares Halteglied (45a) aufweist, das wenigstens einen Randabschnitt des mobilen Endgeräts (17) formschlüssig und/oder kraftschlüssig einfasst und das wenigstens ein Befestigungsmittel aufweist, welches das austauschbare Halteglied (45a) lösbar mit der Sicherheits-Grundsteuervorrichtung (16) verbindet.

9. Roboter-Bedienhandgerät nach einem der Ansprüche 1 bis 8, bei dem die Adaptervorrichtung (18) einen mehrteiligen Rahmen aufweist, der aus Einzelstreben (46), insbesondere geraden Einzelstreben (46) und die Einzelstreben (46) verbindende Eckverbindern (47) aufgebaut ist.

10. Roboter-Bedienhandgerät nach Anspruch 9, bei dem wenigstens eine der Einzelstreben (46) als eine Schiene (46a) ausgebildet ist, an der ein Abstandshalter (45), welcher einen Randabschnitt des mobilen Endgeräts (17) formschlüssig und/oder kraftschlüssig umfasst, entlang der Längserstreckung der Schiene (46a) verstellbar gelagert ist oder eine der Einzelstreben (46) mehrere entlang der Längserstreckung der Einzelstrebe (46) in Abständen, insbesondere in gleichen Abständen voneinander angeordnete Befestigungsstellen (48) aufweist, und ein Abstandshalter (45), welcher einen Randabschnitt des mobilen Endgeräts (17) formschlüssig und/oder kraftschlüssig umfasst, an wenigstens einer dieser Befestigungsstellen (48) befestigt ist.

11. Roboter-Bedienhandgerät nach Anspruch 9 oder 10, bei dem die Sicherheits-Grundsteuervorrichtung (16) an wenigstens einer der Einzelstreben (46), der Eckverbinder (47) und/oder der Schienen (46a) befestigt ist, insbesondere manuell abnehmbar befestigt ist.

12. Roboter-Bedienhandgerät nach einem der Ansprüche 1 bis 11 bei dem die Sicherheits-Grundsteuervorrichtung (16) mehrere in separaten Gehäusen untergebrachte Steuerbauteile aufweist, insbesondere das wenigstens eine Nothalt-Auslösemittel (31), die wenigstens eine Zustimmungseinrichtung (32), und/oder das wenigstens eine Betriebsartauswahlmittel (33) in jeweils einem separaten Gehäuse untergebracht ist und wenigstens eines der mehreren Gehäuse an wenigstens einer der Einzelstreben (46), der Eckverbinder (47) und/oder der Schienen (46a) befestigt ist, insbesondere manuell abnehmbar befestigt ist.

13. Roboter-Bedienhandgerät nach einem der Ansprüche 1 bis 12, bei dem das mobile Endgerät (17) einen programmgesteuerten elektronischen Rechner, ein Touch-Display und ein auf dem elektronischen Rechner gespeichertes Programm aufweist, das zur Erstellung von Roboterprogrammen und/oder zum Ansteuern eines Roboters (1), insbesondere zum Bewegen eines Roboterarms (2) ausgebildet ist und das über das Touch-Display zu bedienen ist.

## Claims

1. Robot manual control device, comprising a basic safety control device (16), a mobile terminal (17) and a holder, which is designed to secure the mobile terminal (17) onto the basic safety control device (16), wherein the holder comprises at least one adapter device (18) which is designed to mechanically connect the mobile terminal (17) to the basic safety control device (16),
**characterised in that** the basic safety control device (16) comprises a first handheld operation unit part (22a) and at least one second handheld operation unit part (22b) which is adjustable relative to the first handheld operation unit part (22a), wherein the handheld operation unit parts (22a, 22b) are coupled to one another adjustably such that the handheld operation unit parts (22a, 22b) in a basic arrangement form a contour-narrowed robot manual control device (15) and in a contour-widened mounting arrangement in which the second handheld operation unit part (22b) is arranged to be offset from the first handheld operation unit part (22a) relative to the basic arrangement, the robot manual control device (15) is designed to mount the mobile terminal (17) by means of the adapter device (18).

2. Robot manual control device according to claim 1, wherein the adapter device (18) comprises at least one adjustable holding member (20) which is designed in a closed position of the adjustable holding member (20) to connect the mobile terminal (17) in a form-fitting and/or force-fitting manner, in particular at least at two diagonally opposite corners of the mobile terminal (17) to the safety control device (16) and in an open position of the adjustable holding member (20) to mechanically release the mobile terminal (17) for its separation from the basic safety control device (16).

3. Robot manual control device according to claim 1 or claim 2, wherein the basic safety control device (16), in particular the first handheld operation unit part (22a) and/or the second handheld operation unit part (22b), comprises at least one emergency stop triggering device (31), at least one enabling device (32), at least one mode selection means (33) and/or a display means, in particular an electronic display (36).

4. Robot manual control device according to claim 3, wherein the basic safety control device (16) is designed and/or configured, to be controlled in the basic arrangement by the at least one emergency stop triggering device (31), the at least one enabling device (32) and/or the at least one mode selection means (33).

5. Robot manual control device according to any of claims 1 to 4, wherein the first handheld operation unit part (22a) and/or the second handheld operation unit part (22b) forms the adapter device (18), in particular the first handheld operation unit part (22a) and/or the second handheld operation unit part (22b) comprises the adjustable holding member (20).

6. Robot manual control device according to any of claims 1 to 5, wherein the adapter device (18) comprises at least one elastically deformable holding member (28a), which is designed to connect the mobile terminal (17) to the basic safety control device (16) under elastic pretensioning.

7. Robot manual control device according to claim 6, wherein the elastically deformable holding member (28a) is produced to form a flexible frame from a section of cord material cut to length, in particular a flexible plastic cord profile.

8. Robot manual control device according to any of claims 1 to 7, wherein the adapter device (18) comprises at least one interchangeable holding member (45a), in particular a frame-shaped interchangeable holding member (45a), which borders at least an edge section of the mobile terminal (17) in a form-fitting and/or a force-fitting manner and comprises at least one securing means, which connects the interchangeable holding member (45a) detachably to the basic safety control device (16).

9. Robot manual control device according to any of claims 1 to 8, wherein the adapter device (18) has a multi-part frame which is assembled from individual struts (46), in particular straight individual struts (46) and corner connectors (47) connecting the individual struts (46).

10. Robot manual control device according to claim 9, wherein at least one of the individual struts (46) is designed as a rail (46a), on which a spacer (45), which encloses an edge section of the mobile terminal (17) in a form-fitting and/or force-fitting manner, is mounted adjustably along the longitudinal extension of the rail (46a), or one of the individual struts (46) comprises a plurality of securing points (48) arranged at intervals along the longitudinal extension of the individual struts (46), in particular arranged equidistant from one another, and a spacer (45), which encloses an edge section of the mobile terminal (17) in a form-fitting and/or force-fitting manner, is secured to at least one of said securing points (48).

11. Robot manual control device according to claim 9 or 10, wherein the basic safety control device (16) is secured onto at least one of the individual struts (46), the corner connector (47) and/or the rails (46a), in particular is secured to be manually removable.

12. Robot manual control device according to any of claims 1 to 11, wherein the basic safety control device (16) comprises a plurality of control components accommodated in separate housings, in particular the at least one emergency stop triggering device (31), the at least one enabling device (32), and/or the at least one mode selection means (33) is accommodated respectively in a separate housing and at least one of the plurality of housings is secured onto at least one of the individual struts (46), the corner connectors (47) and/or the rails (46a), in particular is secured so as to be manually removable.

13. Robot manual control device according to any of claims 1 to 12, wherein the mobile terminal (17) comprises a program-controlled electronic computer, a touch-display and a program saved on the electronic computer, which is designed to create robot programs and/or to control a robot (1), in particular to move a robot arm (2) and which is operated via the touch display.

## Revendications

1. Appareil de commande manuel de robot, présentant un dispositif de commande de base de sécurité (16), un dispositif terminal (17) mobile et un support qui est réalisé pour fixer le dispositif terminal (17) sur le dispositif de commande de base de sécurité (16), le support présentant au moins un dispositif adaptateur (18) qui est réalisé pour relier mécaniquement le dispositif terminal (17) mobile au dispositif de commande de base de sécurité (16), **caractérisé en ce que** le dispositif de commande de base de sécurité (16) présente une première partie d'appareil de commande manuel (22a) et au moins une deuxième partie d'appareil de commande manuel (22b) réglable par rapport à la première partie d'appareil de commande manuel (22a), les parties d'appareil de commande manuel (22a, 22b) étant accouplées l'une à l'autre de manière réglable, de telle sorte que les parties d'appareil de commande manuel (22a, 22b) forment, dans un agencement de base un appareil de commande manuel de robot (15) à contour réduit et, dans un agencement de réception à contour élargi, dans lequel la deuxième partie d'appareil de commande manuel (22b) est agencée de manière déplacée depuis l'agencement de base par rapport à la première partie d'appareil de commande manuel, l'appareil de commande manuel (15) de robot est configuré pour la réception du dispositif terminal (17) mobile par le dispositif adaptateur (18).

2. Appareil de commande manuel de robot selon la revendication 1, dans lequel le dispositif adaptateur (18) présente au moins un organe de retenue (20) réglable qui est réalisé pour relier, dans une position de fermeture de l'organe de retenue (20) réglable, le dispositif terminal (17) mobile par coopération de formes et/ou par coopération de forces, en particulier au moins sur deux coins diagonalement opposés du dispositif terminal (17) mobile, et, pour libérer mécaniquement le dispositif terminal (17) mobile dans une position d'ouverture de l'organe de retenue (20) réglable, pour le séparer du dispositif de commande de base de sécurité (16).

3. Appareil de commande manuel de robot selon la revendication 1 ou 2, dans lequel le dispositif de commande de base de sécurité (16), en particulier la première partie d'appareil de commande manuel (22a) et/ou la deuxième partie d'appareil de commande manuel (22b), présente au moins un moyen de déclenchement d'arrêt d'urgence (31), au moins un dispositif d'assentiment (32), au moins un moyen de sélection du mode de fonctionnement (33) et/ou un moyen d'affichage, en particulier un écran électronique (36).

4. Appareil de commande manuel de robot selon la revendication 3, dans lequel le dispositif de commande de base de sécurité (16) est réalisé et/ou équipé pour être piloté dans l'agencement de base par ledit au moins un moyen de déclenchement d'arrêt d'urgence (31), ledit au moins un dispositif d'assentiment (32) et/ou ledit au moins un moyen de sélection du mode de fonctionnement (33).

5. Appareil de commande manuel de robot selon l'une des revendications 1 à 4, dans lequel la première partie d'appareil de commande manuel (22a) et/ou la deuxième partie d'appareil de commande manuel (22b) forment le dispositif adaptateur (18), en particulier la première partie d'appareil de commande manuel (22a) et/ou la deuxième partie d'appareil de commande manuel (22b) présentent l'organe de retenue (20) réglable.

6. Appareil de commande manuel de robot selon l'une des revendications 1 à 5, dans lequel le dispositif adaptateur (18) présente au moins un organe de retenue (28a) élastiquement déformable qui est réalisé pour relier le dispositif terminal (17) mobile sous précontrainte élastique avec le dispositif de commande de base de sécurité (16).

7. Appareil de commande manuel de robot selon la revendication 6, dans lequel l'organe de retenue (28a) élastiquement déformable est fabriqué pour former un cadre flexible en un tronçon coupé en longueur d'un matériau en forme de cordon, en particulier d'un profil extrudé en matière plastique élastique.

8. Appareil de commande manuel de robot selon l'une des revendications 1 à 7, dans lequel le dispositif adaptateur (18) présente au moins un organe de retenue (45a) interchangeable, en particulier un organe de retenue (45a) interchangeable en forme de cadre qui entoure au moins un tronçon de bord du dispositif terminal (17) mobile par coopération de formes et/ou par coopération de forces et qui présente au moins un moyen de fixation qui relie de manière détachable l'organe de retenue (45a) interchangeable avec le dispositif de commande de base de sécurité (16).

9. Appareil de commande manuel de robot selon l'une des revendications 1 à 8, dans lequel le dispositif adaptateur (18) présente un cadre en plusieurs parties qui est constitué par des montants individuels (46), en particulier par des montants individuels (36) droits et des raccords d'angles (47) reliant les montants individuels (36).

10. Appareil de commande manuel de robot selon revendication 9, dans lequel au moins un des montants individuels (46) est réalisé sous forme de rail (46a) sur lequel un écarteur (45), qui enserre un tronçon de bord du dispositif terminal (17) mobile par coopération de formes et/ou par coopération de forces, est monté réglable le long de l'extension longitudinale du rail (46a), ou un des montants individuels (46) présente plusieurs points de fixation (48) agencés à des intervalles, en particulier à des mêmes intervalles les uns par rapport aux autres le long de l'extension longitudinale des montants individuels (46), et un écarteur (45) qui enserre un tronçon de bord du dispositif terminal (17) mobile par coopération de formes et/ou par coopération de forces, est fixé sur au moins un de ces points de fixation (48).

11. Appareil de commande manuel de robot selon la revendication 9 ou 10, dans lequel le dispositif de commande de base de sécurité (16) est fixé sur au moins un des montants individuels (46), des raccords d'angles (47) et/ou des rails (46a), en particulier fixé de manière manuellement détachable.

12. Appareil de commande manuel de robot selon l'une des revendications 1 à 11, dans lequel le dispositif de commande de base de sécurité (16) présente plusieurs composants de commande logés dans des boîtiers séparés, en particulier ledit au moins un moyen de déclenchement d'arrêt d'urgence (31), ledit au moins un dispositif d'assentiment (32) et/ou ledit au moins un moyen de sélection du mode de fonctionnement (33) sont chacun logés dans un boîtier séparé et au moins un de la pluralité des boîtiers est fixé sur au moins un des montants individuels (46), des raccords d'angles (47) et/ou des rails (46a), en particulier fixé de manière manuellement détachable.

13. Appareil de commande manuel de robot selon l'une des revendications 1 à 12, dans lequel le dispositif terminal (17) mobile présente un calculateur électronique commandé par programme, un écran tactile et un programme mémorisé sur le calculateur électronique qui est réalisé pour établir des programmes de robot et/ou pour piloter un robot (1), en particulier pour déplacer un bras de robot (2), et qui peut actionné par l'intermédiaire de l'écran tactile.
